(19) Europäisches Patentamt
European Patent Office
Office européen des brevets

(11) **EP 2 258 616 B1**

(12) **FASCICULE DE BREVET EUROPEEN**

(45) Date de publication et mention de la délivrance du brevet:
**16.05.2012 Bulletin 2012/20**

(51) Int Cl.:
***B64C 27/22*** *(2006.01)*    ***G05D 1/00*** *(2006.01)*

(21) Numéro de dépôt: **10004484.1**

(22) Date de dépôt: **28.04.2010**

(54) **Procédé et systéme de commande et de régulation motrice pour hélicoptère hybride**

Verfahren und System zur Steuerung und Antriebsregulierung für Hybridhelikopter

Method and system for drive control and regulation for a hybrid helicopter

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **04.06.2009 FR 0902684**

(43) Date de publication de la demande:
**08.12.2010 Bulletin 2010/49**

(73) Titulaire: **EUROCOPTER**
**13725 Marignane Cédex (FR)**

(72) Inventeur: **Eglin, Paul**
**Traverse Baret**
**13100 Aix En Provence (FR)**

(74) Mandataire: **Pouillot, Laurent Pierre Paul**
**GPI & Associés**
**1330, rue Guillibert de la Lauzière**
**EuroParc de Pichaury, Bât B2.9 - 1er Et.**
**13856 Aix-en-Provence Cedex 3 (FR)**

(56) Documents cités:
FR-A1- 2 916 421      US-A1- 2002 011 539
US-A1- 2008 237 392

**Description**

La présente invention se rapporte au domaine technique général des systèmes de commande de vol automatiques ou semi-automatiques et plus particulièrement à une chaîne semi-automatique de commande du pas des hélices propulsives latéralement à gauche et latéralement à droite d'un giravion particulier, à savoir un hélicoptère hybride.

La présente invention se rapporte à un procédé de commande et de régulation pour giravion et son système de commande, c'est-à-dire régulation ou pilotage des organes moteur du giravion.

On désigne par giravion un aéronef dont la sustentation est assurée totalement ou partiellement par une (ou plusieurs) hélice(s) d'axe sensiblement vertical, de grand diamètre, appelé rotor ou encore voilure tournante.

On distingue dans la catégorie des giravions plusieurs types distincts, mais l'hélicoptère hybride conforme à l'invention comporte en plus d'au moins un rotor principal, au moins une hélice propulsive, de préférence deux hélices propulsives à pas variable, faisant partie de groupes propulseurs latéralement à gauche et à droite de l'hélicoptère hybride.

L'hélicoptère classique dont au moins un rotor principal, entraîné par une motorisation appropriée, assure à la fois la sustentation et la propulsion. L'hélicoptère est capable de vol stationnaire en restant en un point fixe de l'espace, peut décoller et atterrir verticalement et peut se déplacer dans n'importe quelle direction (avant-arrière-côtés-haut-bas).

La régulation de la puissance motrice d'un hélicoptère classique (dénué de propulseur(s) à hélice(s)) comporte généralement un organe/module de commande qui adapte la puissance délivrée par l'installation motrice à la puissance requise par les ensembles dynamiques (rotor(s) et accessoires), de façon à maintenir le régime de rotation du (des) rotor(s) principal(aux) et de la chaîne de transmission de puissance, à sa valeur de consigne.

Sur un aéronef propulsé par hélice(s) dont le pas est variable, la régulation de puissance comporte généralement un organe/module de régulation (en général de type hydromécanique) qui adapte le pas de l'hélice propulsive de façon à consommer toute la puissance disponible résultant de la manipulation par le pilote d'un levier ou organe de commande des gaz (de la poussée).

Ces deux régulations ne peuvent pas être juxtaposées pour assurer la régulation de puissance d'un giravion équipé de propulseur(s) à hélice(s), car ces modes de régulation sont antagonistes. L'organe d'adaptation de puissance d'une régulation conventionnelle d'hélicoptère s'opposerait à une variation transitoire de vitesse de la chaîne de transmission de puissance qui résulterait d'une commande de variation de poussée sur l'hélice (ou les hélices).

Par ailleurs, pour un giravion équipé de propulseur(s) à hélice(s), une régulation du/des propulseur(s) à hélice(s) dans laquelle le pilote commanderait directement les variations de pas de l'hélice (des hélices) de propulsion, pourrait provoquer, par suite de variations brutales du couple moteur transmis à (aux) l'hélice(s), une détérioration de cette (ces) dernière(s).

On connaît par exemple par l'intermédiaire des documents US 4 488 851 et US 4 514 142, un hélicoptère à rotor principal de sustentation et comportant également un rotor arrière propulsif. Un système de contrôle permet au pilote de limiter la puissance consommée par le rotor arrière propulsif au profit de la puissance nécessaire au rotor principal de sustentation. Un tel contrôle effectué par le pilote ne facilite pas les opérations de pilotage.

On connaît également par l'intermédiaire du document FR 2 916 421, un système de commande pour giravion comportant un rotor, au moins une hélice de propulsion à pas variable et un moteur d'entraînement du rotor et de l'hélice. Le système comporte un organe d'élaboration d'une consigne de pas d'hélice en fonction d'un ordre de commande de variation de poussée, un organe d'élaboration d'une consigne de vitesse d'entraînement du rotor et de l'hélice en fonction de la vitesse de déplacement du giravion ainsi qu'un organe d'élaboration d'une consigne de vitesse du moteur en fonction de l'ordre de commande de variation de poussée, de la consigne de vitesse d'entraînement et d'un ordre de commande de pas collectif du rotor.

Dans un hélicoptère hybride à hélices à pas variable, le pilote doit à la fois limiter d'une part le déplacement du pas collectif vers le haut et par suite la puissance transmise au(x) rotor(s) par la motorisation via les organes de transmission pour ne pas dépasser les limitations mécaniques ou thermiques de ces éléments et, d'autre part, pour les mêmes rasions, limiter la commande de poussée des hélices c'est-à-dire la commande de pas des hélices, comme expliqué ci-après.

Par ailleurs, la motorisation de l'hélicoptère hybride étant constituée par un (des) turbomoteur(s), les vitesses de rotation des sorties du (ou des) turbomoteur(s), de la (ou des) hélice(s), du (des) rotor(s) et du système mécanique d'interconnexion sont proportionnelles entre elles, le rapport de proportionnalité étant constant quelle que soit la configuration de vol de l'hélicoptère hybride en conditions normales de fonctionnement de la chaîne cinématique intégrée.

On comprend ainsi que si l'hélicoptère hybride est équipé d'un seul turbomoteur, celui-ci entraîne en rotation le(s) rotor(s) et la (ou les) hélice(s) via le système mécanique d'interconnexion. Par contre, si deux turbomoteurs ou plus équipent l'hélicoptère hybride, le(s) rotor(s) et la (ou les) hélice(s) sont alors entraînés en rotation via le système mécanique d'interconnexion par lesdits turbomoteurs.

Autrement dit, la chaîne cinématique fonctionne sans rapport de vitesse de rotation variable entre le (ou les) turbomoteur(s), la (ou les) hélice(s), le(s) rotor(s) et le système mécanique d'interconnexion.

Par conséquent, le(s) rotor(s) demeure(nt) avantageusement toujours entraîné(s) en rotation par le(s) turbomoteur(s), et développe toujours une portance quelle que soit la configuration de l'appareil.

Plus précisément, le(s) rotor est (sont) de la sorte destiné(s) à assurer la totalité de la portance de l'hélicoptère hybride pendant les phases de décollage, d'atterrissage et de vol vertical puis partiellement pendant le vol de croisière, une aile auxiliaire contribuant alors pour partie à supporter ledit hélicoptère hybride.

Ainsi, le(s) rotor(s) exerce(nt) partiellement la sustentation de l'hélicoptère hybride en vol de croisière avec éventuellement une faible contribution aux forces propulsives ou traction (cas de l'hélicoptère), mais sans aucune contribution à la traînée (cas de l'autogire). Ces conditions de fonctionnement conduisent donc à une fourniture réduite de puissance dédiée à la traction du (des) rotor(s). Une faible contribution aux forces propulsives se fait par une faible inclinaison du (des) disque(s) rotor vers l'avant de l'appareil. Ce processus dégrade très peu la finesse du (des) rotor (s) et se révèle par suite plus intéressant en terme de bilan de puissance qu'une demande de poussée supplémentaire exercée par la (ou les) hélice(s).

De façon avantageuse, l'aile est composée de deux demi-ailes, chaque demi-aile étant de part et d'autre du fuselage. Ces demi-ailes peuvent constituer une aile haute, auquel cas elles présentent de préférence un dièdre négatif. Cependant, elles peuvent aussi constituer soit une aile basse avec de préférence un dièdre positif ou encore une aile intermédiaire avec un dièdre quelconque. La forme en plan de ces demi-ailes, selon les variantes, peut correspondre à des demi-ailes rectangulaires, effilées, en flèche avant ou arrière ou autres.

Ainsi, par l'intermédiaire de la commande de poussée ou de pas moyen (appelée demi-somme) des hélices propulsives, le pilote peut involontairement provoquer une baisse de régime du (des) rotor(s) principal(aux), dépasser la vitesse air maximale autorisée *VNE* ou dépasser les limites de tenue mécanique ou dépasser les limites thermiques du (des) groupe(s) propulseur(s), turbomoteur (s), ou des hélice(s).

Le but de la présente invention vise à proposer un nouveau procédé de commande et de régulation du pas de la ou des hélices propulsives d'un giravion conforme à l'hélicoptère hybride.

Le but de la présente invention vise par conséquent à proposer un nouveau système de commande et de régulation du pas des hélices propulsives de l'hélicoptère hybride, permettant de protéger l'aéronef d'une commande du pilote intempestive ou d'une commande de pas volontaire mais excessive.

En outre, en cas de perte de vitesse, par exemple sur prise d'assiette à cabrer, l'incidence aérodynamique des pales des hélices augmente si le pilote ne réduit pas leurs pas. Dans l'hypothèse d'une telle augmentation d'incidence, il s'en suit une augmentation de la puissance consommée par les hélices qui peut dépasser la capacité des moteurs.

Un but de la présente invention vise par conséquent à proposer un nouveau système de commande et de régulation du pas des hélices de l'hélicoptère hybride, permettant de protéger l'aéronef en ajustant le pas des hélices à la vitesse de déplacement de l'aéronef, pour éviter toute divergence de la puissance requise par les hélices, c'est à dire pour éviter tout appel de puissance des hélices excédant les capacités des moteurs et/ou de la transmission.

Il est évident que la présente invention concerne les aéronefs à une ou à plusieurs hélices propulsives.

Divers paramètres physiques sont utilisés dans la suite, parmi lesquels *Trqmax_aut* est le couple maximal admissible par la chaîne de transmission, *PP1max* est la valeur maximale des puissances actuelles des hélices (6) droite et gauche, *Ptot* est la puissance totale consommée par les hélices propulsives, *Pmd* est la puissance maximale disponible au niveau moteur pour la (les) hélice(s) propulsive(s) (c'est-à-dire la puissance maximale au niveau moteur (s) diminuée de la puissance consommée par le rotor principal, les accessoires et les pertes de transmission), IAS est la vitesse air indiquée, *VNE* est la vitesse air maximale autorisée, $\Omega$ est la vitesse de rotation des hélices propulsives et $\Omega^*$ est la consigne de vitesse de rotation desdites hélices, DDM étant la marge de débattement à piquer de la commande cyclique longitudinale en % du débattement total.

Les objectifs assignés à l'invention sont atteints à l'aide d'un procédé de commande et de régulation pour giravion comportant au moins un rotor principal de sustentation, au moins une hélice propulsive à pas variable et au moins une source motrice pour entraîner le(s) rotor(s) principal(aux) et au moins une hélice, ledit procédé consistant à élaborer au moins une consigne de pas moyen $\beta tcl$ pour l'hélice ou pour les hélices, en fonction d'un ordre de commande de variation de poussée *Tcl* et en fonction de la puissance consommée par l'hélice ou par les hélices, caractérisé en ce qu'il consiste à définir différents modes de fonctionnement parmi lesquels :

- un mode direct, dans lequel la valeur du pas moyen résulte directement de l'ordre de commande de variation de poussée *Tcl*,

- un mode forcé, en cas d'autorotation du (des) rotor(s) principal(aux),dans lequel le pas moyen est forcé automatiquement sur commande du pilote, à une valeur de pas calculée,

- un mode régulé, dans lequel on régule la puissance consommée par l'hélice ou les hélices en fonction d'une consigne de puissance issue d'une commande de variation de poussée *Tcl*,

- et un mode protégé, lequel est activé dans le cadre des différents autres modes de fonctionnement hormis le mode forcé, lorsque l'un au moins des différents paramètres physiques limitants a atteint ou dépassé sa limite correspondante, et dans lequel on diminue automatiquement la consigne de pas moyen β*tcl.*

Selon un exemple de mise en oeuvre conforme à l'invention, le procédé consiste à activer le mode protégé lorsqu'une au moins des conditions suivantes sur les paramètres physiques limitants IAS, DDM, $\Omega$, PP1max, Ptot est remplie :

- $IAS \geq VNE,$

- $DDM \leq 10\%,$

- $(\Omega - \Omega^*) <- 0,6$ rad/s,

- $PP1max > (Trqmax\_aut \times \Omega),$

- $Ptot > Pmd,$

avec *Trqmax_aut* étant le couple maximal admissible par la chaîne de transmission, *PP1max* étant la valeur maximale des puissances actuelles des hélices (6) droite et gauche, *Ptot* étant la puissance totale consommée par les hélices propulsives, *Pmd* étant la puissance maximale disponible au niveau moteur pour la (les) hélice(s) propulsive(s), *IAS* étant la vitesse air indiquée, *VNE* étant la vitesse air maximale autorisée, $\Omega$ étant la vitesse de rotation des hélices propulsives, $\Omega^*$ étant la consigne de vitesse de rotation desdites hélices et *DDM* étant la marge actuelle de débattement à piquer de la commande cyclique longitudinale exprimée en % de l'amplitude totale de débattement.

$\Omega^*$ peut être considéré comme une constante pour des hélicoptères classiques ou des aéronefs conformes à l'invention. Il existe cependant des méthodes, connues en tant que telles, de calcul et/ou de détermination de la consigne de vitesse de rotation des hélices propulsives. Pour certaines applications, à vitesse de l'aéronef constante, $\Omega^*$ varie en fonction des conditions atmosphériques telles que l'altitude et la température.

Selon une variante du procédé conforme à l'invention, le mode protégé, une fois engagé ou activé, se substitue au mode de fonctionnement initial, par exemple le mode régulé ou le mode direct, jusqu'au rétablissement de conditions de fonctionnement optimales

Selon un exemple de mise en oeuvre conforme à l'invention, le mode forcé est engagé sur commande prioritaire du pilote.

Dans le mode forcé du procédé conforme à l'invention, la valeur du pas moyen β est par exemple telle que

$$\beta = \beta_0 + Arctg\left(\frac{TAS}{0,75.\Omega.R}\right) + I(Tcl)^{-5,+5} \text{ , où } \beta_0 \text{ est une constante, } R \text{ étant le rayon du rotor des hélices, } \Omega$$

étant la vitesse de rotation des hélices, TAS étant la vitesse air vraie de l'aéronef et $I(Tcl)^{-5,+5}$ étant l'intégrale de la fonction *Beep(Tcl),* valant 1, 0 ou -1, écrêtée à -5° et à +5°, indiquant la possibilité pour le pilote de modifier le pas moyen en actionnant la commande de variation de poussée *Tcl* avec une valeur de pas comprise entre +5° et -5°.

Dans le cadre d'une première variante de mise en oeuvre du procédé conforme à l'invention, on définit au moins certains modes de fonctionnement ainsi que leurs modalités d'engagement ou d'activation de la manière précisée ci-après.

Selon un exemple de mise en oeuvre du procédé conforme à l'invention, le mode direct est engagé automatiquement lorsque le pas moyen de l'hélice ou des hélices est inférieur à une première valeur β*tcl 1* ou lorsque la puissance consommée *P* au niveau de l'hélice ou des hélices, est inférieure à une seconde valeur *Pthr1.*

Selon un exemple de mise en oeuvre du procédé conforme à l'invention, le mode régulé est engagé automatiquement lorsque d'une part le pas moyen est supérieur à une troisième valeur constante β*tcl 2* et d'autre part lorsque la puissance consommée *P* au niveau de l'hélices ou des hélices est supérieure à une quatrième valeur constante *Pthr2.*

A titre d'exemple, le procédé conforme à l'invention consiste, dans le cadre du mode protégé, à utiliser une fonction de limitation/régulation de la consigne de puissance *P\** ainsi qu'une correction proportionnelle intégrale PI sur *(P\*-P)* ou*(P$_{ed}$\*-P),* pour déterminer la consigne de pas moyen β*tcl\*,* en mode régulé, selon un algorithme déterminé, *P* étant la puissance consommée au niveau de l'hélice ou des hélices propulsives et *P$_{ed}$\** étant cette même consigne décrémentée ou diminuée.

Selon un exemple de mise en oeuvre du procédé conforme à l'invention, l'algorithme consiste :

- si l'instruction de poussée de l'hélice ou des hélices est supérieure à la valeur : $\dfrac{\Omega}{\Omega^*} \times Pmd$ , la consigne de puissance P* est limitée à cette valeur, *Pmd* étant la puissance maximale disponible au niveau moteur pour une ou plusieurs hélices, $\Omega$ et $\Omega^*$ étant respectivement la vitesse de rotation de l'hélice ou des hélices et la consigne correspondante,

- si la marge actuelle de débattement à piquer de la commande cyclique longitudinale exprimée en % de l'amplitude totale de débattement, *DDM,* est inférieure à 10%, la consigne de puissance P* est décrémentée de la valeur : *(DDM-10)* × *PPgradddm + PPiddm x* ∫*(DDM-10%)dt, PPgradddm* et *PPiddm* étant des constantes,

- si la vitesse air *IAS* est supérieure à la vitesse air maximale *VNE,* la consigne de puissance P* est décrémentée de la valeur : *(IAS-VNE)x PPgradias + PPiias* × ∫*(IAS - VNE)dt, PPgradias* et *PPiias* étant des constantes,

- si la valeur maximale des puissances actuelles des hélices droite et gauche *PP1max* est supérieure à la valeur (*Trqmax_aut* × $\Omega$), la consigne de puissance P* est décrémentée de la valeur : *PP1max-(Trqmax_aut* × $\Omega$)*, Trqmax_ aut* étant une constante,

- si la valeur de $\Omega - \Omega^*$ est inférieure à -0,6 rad/s, la consigne de puissance est décrémentée de la valeur :

  *PPgrad*$\Omega$ *x*$(\Omega - \Omega^*)$ *+ PPi*$\Omega$ × ∫$(\Omega - \Omega^*)dt$*, PPgrad*$\Omega$ *et PPi*$\Omega$ étant des constantes.

Dans le cadre d'une seconde variante de mise en oeuvre du procédé conforme à l'invention, on définit certains modes de fonctionnement ainsi que leurs modalités d'engagement ou d'activation de la manière précisée ci-après.
Selon un exemple de mise en oeuvre conforme à l'invention, le procédé consiste à définir un mode à pas constant dans lequel, le pas moyen de la ou des hélices propulsives est constant.
Selon un exemple de mise en oeuvre du procédé conforme à l'invention, le mode à pas constant est engagé lorsqu'on a *P*≤*Pseuil* concomitamment l'état 0 des états -1,0,+1 de la commande impulsionnelle de variation de poussée *Tcl* est activé, *P* étant la puissance actuelle de l'hélice ou des hélices et *Pseuil* étant une constante choisie grâce à une analyse des polaires des hélices propulsives.
Selon un exemple de mise en oeuvre du procédé conforme à l'invention, le mode direct est engagé lorsque l'ordre de commande de variation de poussée *Tcl* est obtenu par l'utilisation d'une commande impulsionnelle à trois états -1, 0, +1 en actionnant les état +1 ou -1.
Selon un exemple de mise en oeuvre du procédé conforme à l'invention, le mode régulé est engagé lorsqu'on a *P>Pseuil* concomitamment à l'absence d'ordre de commande de variation de poussée *Tcl,* en activant l'état 0 de la commande impulsionnelle à trois états -1, 0, +1, *P* étant la puissance actuelle de l'hélice ou des hélices et *Pseuil* étant une constante choisie grâce à une analyse des polaires des hélices propulsives.
Selon un exemple de mise en oeuvre conforme à l'invention, le procédé consiste dans le cadre du mode protégé : à utiliser au moins une boucle de surveillance d'un paramètre physique limitant, à vérifier si la limite se rapportant au dit paramètre est atteinte ou dépassée et dans l'affirmative maintenir l'activation du mode protégé.
Selon un exemple de mise en oeuvre conforme à l'invention, le procédé consiste à choisir dans l'ordre de priorité de 1 à 5 suivant, le paramètre physique limitant pour lequel la limite correspondante est atteinte ou dépassée et pour lequel la boucle de surveillance est activée, à savoir :

1/ la vitesse de rotation $\Omega$ de la ou des hélices,

2/ la puissance moteur disponible pour la (les) hélice(s), *Pmd,*

3/ le couple de transmission, *Trq,*

4/ la marge actuelle de débattement à piquer de la commande cyclique longitudinale exprimée en % de l'amplitude totale de débattement, *DDM,*

5/ la vitesse air indiquée, *IAS*.

Selon un exemple de mise en oeuvre du procédé conforme à l'invention, le mode protégé consiste à utiliser au moins un paramètre de vol se rapportant à la marge de puissance ΔP disponible ou à la marge de couple Δ*Trq* disponible pour écrêter ou diminuer l'ordre de commande si Δ P <0 ou si Δ *Trq* <0 et déterminer ainsi une consigne de pas moyen β*tcl* * compatible avec un prélèvement de puissance de l'hélice ou des hélices, ne dépassant pas la marge de puissance disponible, l'état +1 de la commande impulsionnelle étant par ailleurs inhibé.

Selon un exemple de mise en oeuvre du procédé conforme à l'invention, le terme d'écrêtage est $\dfrac{\partial \beta}{\partial P} \times \Delta P$

si Δ P <0 ou $\dfrac{\partial \beta}{\partial Trq} \times \Delta Trq$ si Δ *Trq* <0.

Selon un exemple de mise en oeuvre du procédé conforme à l'invention, le mode protégé consiste à utiliser au moins un paramètre de vol se rapportant à la marge de la vitesse de rotation ΔΩ disponible pour le rotor de l'hélice ou des hélices, à la marge de la vitesse air indiquée Δ*IAS* disponible ou à l'écart de marge actuelle de débattement à piquer de la commande cyclique longitudinale exprimée en % de l'amplitude totale de débattement Δ*DDM =* DDM-10%, pour effectuer une correction proportionnelle intégrale PI sur ledit paramètre et si ΔΩ-0,6 rad/s ou si Δ*IAS (0* ou si ΔDDM (0, ⟨ décrémenter l'ordre de commande avec le résultat de la régulation proportionnelle intégrale PI, pour déterminer une consigne de pas moyen β*tcl* * compatible avec un prélèvement de puissance de l'hélice ou des hélices, ne dépassant pas la marge de puissance disponible, l'état +1 de la commande impulsionnelle étant par ailleurs inhibé.

Selon un exemple de mise en oeuvre conforme à l'invention, le procédé consiste :

- si la marge actuelle de débattement à piquer de la commande cyclique longitudinale exprimée en % de l'amplitude totale de débattement *DDM* est inférieure à 10%, la consigne de pas moyen β*tcl* * est décrémentée de la valeur : *(DDM-10)*x *PPgradddm + PPiddm* × ∫*(DDM -10%)dt, PPgradddm* et *PPiddm* étant des constantes,

- si la vitesse air *IAS* est supérieure à la vitesse air maximale autorisée *VNE,* la consigne de pas moyen β*tcl* * est décrémentée de la valeur : *(IAS-VNE)*× *PPgradias + PPiias* × ∫*(IAS-VNE)dt, PPgradias* et *PPiias* étant des constantes,

- si la valeur de Ω - Ω* est inférieure à -0,6 rad/s, la consigne de pas moyen Ω*tcl* * est décrémentée de la valeur :

    *PPgrad*Ω ×*(Ω-Ω*) + PPi*Ω × ∫*(Ω-Ω*)dt, PPgrad*Ω et *PPi*Ω étant des constantes.

Selon un exemple de mise en oeuvre du procédé conforme à l'invention, la puissance consommée par l'hélice ou par les hélices est estimée par un algorithme spécifique, en fonction des pas β1,β2 des hélices, de la vitesse air vraie *TAS*, de la vitesse de rotation des hélices Ω et de la densité de l'air σ.

Selon un exemple de mise en oeuvre du procédé conforme à l'invention, la puissance consommée par l'hélice ou par les hélices est estimée par un algorithme spécifique, en fonction des pas β*1*,β*2* des hélices, de la vitesse air vraie *TAS,* de la consigne de vitesse de rotation des hélices Ω* et de la densité de l'air σ.

Selon un exemple de mise en oeuvre du procédé conforme à l'invention, la puissance consommée par une ou plusieurs hélices est mesurée par l'intermédiaire de capteurs du genre couplemètres sur la transmission des hélices.

Une telle estimation permet d'éviter l'utilisation de couplemètres sur la transmission des hélices et ce pour des raisons de mise au point et de fiabilité de ce genre de capteurs.

Les objets assignés à l'invention sont également atteints à l'aide d'un système de commande et de régulation pour giravion comportant au moins un rotor principal de sustentation, au moins une hélice propulsive à pas variable et au moins une source motrice pour entraîner le(s) rotor(s) principal(aux) et l'hélice ou les hélices, ledit système comprenant des moyens pour mettre en oeuvre le procédé de commande et de régulation tel que présenté ci-dessus.

Le système de commande et de régulation conforme à l'invention comprend par exemple une chaîne mécanique de secours, pour la commande en mode direct du pas de l'hélice ou les hélices propulsives ainsi qu'une chaîne électrique pour la commande du pas de l'hélice ou des hélices propulsives, ladite chaîne électrique comportant des moyens pour assurer les respect des limitations.

A titre d'exemple, la chaîne mécanique comprend :

- un levier Tcl pour la commande du pas moyen β*tcl*,

- un palonnier pour la commande du pas différentiel β*d*,

- un amortisseur de palonnier,

- un guignol à rapport variable la variation étant fonction de la position du levier *Tcl* pour diminuer l'autorité du palonnier en fonction de la poussée,

- un combinateur/coupleur pour sommer et soustraire le pas moyen β*tcl* et le pas différentiel β*d*,

- et un système de bielles, câbles et poulies.

A titre d'exemple, la chaîne électrique comprend :

- un beep *Tcl* associé au levier de pas collectif,

- un premier vérin série pour la commande du pas moyen β*tcl* de l'hélice gauche,

- un second vérin série pour la commande du pas moyen β*tcl* de l'hélice droite,

- un premier vérin de trim du levier *Tcl*

- un second vérin de trim du palonnier,

- un calculateur recevant des informations du système de contrôle de vol FCS et établissant les lois de commande du pas des hélices

- des moyens de mesure de la position des commandes du pilote sur le levier *Tcl* et sur le palonnier,

- des liaisons électriques,

- et des moyens pour mesurer la position des vérins série.

Les objets assignés à l'invention sont également atteints à l'aide d'un programme de commande d'un giravion pour mettre en oeuvre le procédé de commande et de régulation, caractérisé en ce qu'il comporte un code fixé sur un support tel qu'une mémoire ou matérialisé par un signal, le code étant lisible et/ou exécutable par au moins une unité de traitement de données telle qu'un processeur embarqué ou susceptible d'être embarqué sur un giravion, pour commander et/ou réguler le réglage du pas d'au moins une hélice propulsive, le code comportant des segments de code pour mettre en oeuvre respectivement des opérations caractéristiques ou étapes dudit procédé de commande et de régulation.

Les objets assignés à l'invention sont également atteints à l'aide d'un Aéronef du genre giravion, comportant un système de commande et de régulation tel que présenté ci-dessus.

Le système de régulation conforme à l'invention présente un substantiel avantage en ce qu'il permet la protection du domaine de vol et des limitations à travers les commandes de pas de l'hélice propulsive ou des hélices propulsives d'un hélicoptère hybride.

Un autre avantage de l'invention réside dans le fait qu'elle rend compatible la régulation d'au moins une hélice propulsive avec la régulation et le pilotage d'un hélicoptère.

Un autre avantage du procédé de commande et de régulation conforme à l'invention, réside dans le fait que ledit procédé permet une régulation et une protection de l'aéronef dans des domaines de vol, facilitant ainsi le pilotage.

Un autre avantage du procédé conforme à l'invention réside dans la possibilité de piloter de la vitesse air ou de la vitesse sol grâce à une commande impulsionnelle à trois positions, appelée beep *Tcl*, évitant au pilote de se préoccuper des limitations moteurs/transmissions.

Le procédé de commande et de régulation conforme à l'invention permet d'améliorer la sécurité grâce à un respect automatique des limitations.

La protection des ensembles mécaniques permet également d'augmenter leur durée de vie.

En outre, selon l'invention, la priorité est automatiquement attribuée au fonctionnement du rotor de sustentation.

L'invention permet également de respecter la plage de commande cyclique longitudinale et de pas collectif du rotor principal en limitant la propulsion dès lors que la marge à piquer se réduit en dessous d'un seuil prédéfini (mode rotor propulsif) ou que le pas collectif descend en dessous d'un seuil prédéfini (mode rotor autogire).

D'autres aspects, caractéristiques, et avantages de l'invention apparaissent dans la description qui suit, avec des exemples de réalisation donnés à titre illustratif en référence aux figures annexées qui représentent :

- figure 1 : une vue en perspective schématique d'un exemple de réalisation d'un hélicoptère hybride selon l'invention,

- figure 2: une illustration de la chaîne fonctionnelle d'un exemple de conception du système de commande et de régulation conforme à l'invention, fonctionnant dans un mode direct sans protection, selon une première variante,

- figure 3: une illustration de la chaîne fonctionnelle d'un exemple de conception du système de commande et de régulation conforme à l'invention, fonctionnant dans un mode régulé avec protection, selon la première variante,

- figure 4: une illustration de la chaîne fonctionnelle d'un exemple de conception du système de commande et de régulation conforme à l'invention, fonctionnant dans un mode direct sans protection, selon une seconde variante,

- figure 5: une illustration de la chaîne fonctionnelle d'un exemple de conception du système de commande et de régulation conforme à l'invention, fonctionnant dans un mode régulé sans protection, selon une seconde variante,

- figure 6: une illustration de la chaîne fonctionnelle d'un exemple de conception du système de commande et de régulation conforme à l'invention, fonctionnant dans un mode protégé, selon la seconde variante avec un premier exemple de protection,

- figure 7: une illustration de la chaîne fonctionnelle d'un exemple de conception du système de commande et de régulation conforme à l'invention, fonctionnant dans un mode protégé, selon la seconde variante avec un second exemple de protection,

- figure 8: une illustration de la chaîne fonctionnelle d'un exemple de conception du système de commande et de régulation conforme à l'invention, fonctionnant dans un mode protégé, selon la seconde variante avec un troisième exemple de protection,

- figure 9: une illustration de la chaîne fonctionnelle d'un exemple de conception du système de commande et de régulation conforme à l'invention, fonctionnant dans un mode protégé, selon la seconde variante avec un quatrième exemple de protection,

- figure 10 : une illustration de la chaîne fonctionnelle d'un exemple de conception du système de commande et de régulation conforme à l'invention, fonctionnant dans un mode protégé, selon la seconde variante avec un cinquième exemple de protection,

- figure 11 : une illustration d'un exemple de réalisation d'une architecture de la chaîne de commande de pas des hélices dans laquelle intervient le système de régulation conforme à l'invention.

Au sens de la présente demande, l'expression « hélicoptère hybride » désigne un giravion équipé de propulseur(s) du genre hélices, avec une régulation adaptée au fonctionnement du (des) rotor(s) principal(aux) de sustentation d'une part et à celui des hélices d'autre part.

Sauf indication contraire, explicite ou implicite, le terme « rotor » désigne une voilure tournante du giravion.

Différentes notions utilisées dans la présente sont également sommairement définies. Ainsi :

- IAS, signifie Vitesse Air Indiquée,

- TAS, signifie Vitesse Air Vraie,

- VNE, signifie Vitesse Air Maximale Autorisée.

Sauf indication contraire, explicite ou implicite, les éléments structurellement et fonctionnellement identiques et présents sur plusieurs figures distinctes, sont affectés d'une seule et même référence.

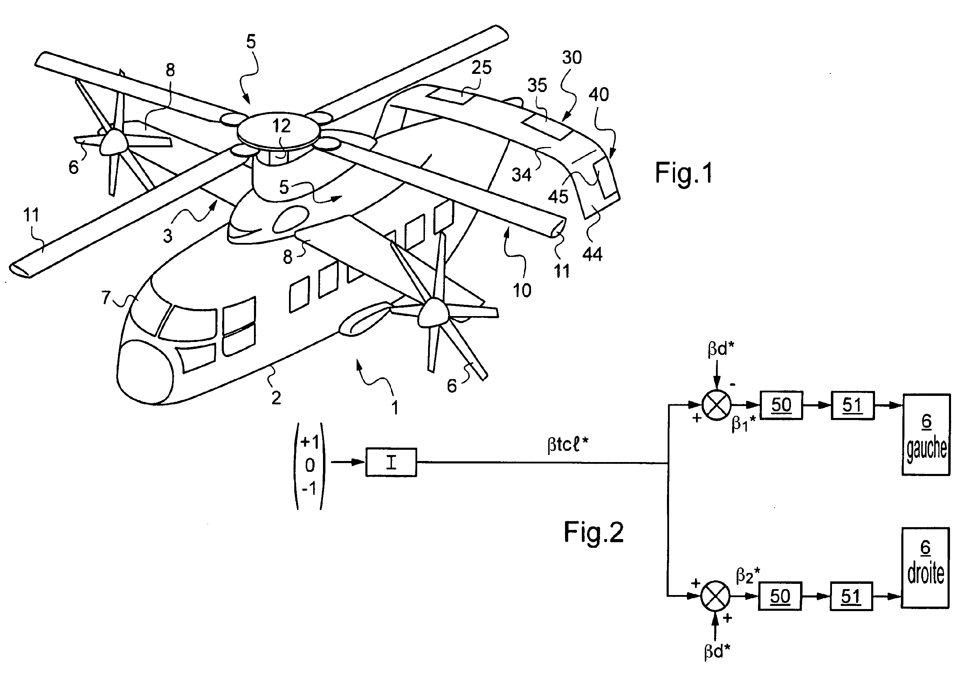

Par référence à la figure 1 notamment, l'hélicoptère hybride 1 comprend un fuselage 2, à l'avant duquel est prévu le poste de pilotage 7, un rotor 10 destiné à entraîner en rotation des pales 11 grâce d'une part à deux turbomoteurs 5 disposés sur le dessus du fuselage 2 (non visibles sur la figure 1 en raison de la présence de carénages), de part et d'autre par rapport au plan de symétrie longitudinal de l'appareil, et d'autre part à une première boîte d'engrenages principale MGB, non représentée sur la figure 1.

De plus, l'hélicoptère hybride 1 est pourvu d'une aile haute 3 composée de deux demi-ailes 8 disposées sur le dessus du fuselage 2, ces demi-ailes 8 ayant une forme en plan sensiblement rectangulaire et présentant un dièdre négatif.

La propulsion de l'hélicoptère hybride 1 est assurée par deux hélices 6 entraînées par les deux turbomoteurs 5, une hélice 6 étant disposée à chaque extrémité externe de l'aile 3.

Par ailleurs, il est prévu, au voisinage de l'extrémité arrière du fuselage 2, des surfaces de stabilisation et de manoeuvre à savoir pour la profondeur, un empennage horizontal 30 avec deux gouvernes de profondeur mobiles 25, 35 par rapport à la partie avant 34 et pour la direction deux empennages appropriés 40, chacun de chaque côté de l'empennage horizontal 30.

Avantageusement, les empennages 40, verticaux ou inclinés par rapport à la verticale, peuvent être constitués d'une partie avant fixe (ou dérive) 44 avec en arrière une partie mobile, ou gouverne de direction 45 pour le pilotage en lacet.

En l'occurrence, l'empennage horizontal 30 et les empennages verticaux 40 forment un U renversé vers le fuselage 2.

Du point de vue dimensionnel, l'hélicoptère hybride 1 correspond de préférence aux caractéristiques suivantes, relatives à un appareil d'environ 8 tonnes de masse maximale autorisée au décollage :

- diamètre D du rotor : 16 mètres environ,

- diamètre d des hélices : 2,6 mètres,

- envergure L de l'aile : 8 mètres,

- allongement λ de l'aile : 5,3.

De plus, l'hélicoptère hybride 1 est équipé d'une chaîne cinématique intégrée (non représentée à la figure 1), qui, outre les deux turbomoteurs 5, le rotor 10 et les deux hélices 6, comprend un système mécanique d'interconnexion (non représenté à la figure 1) entre ces éléments de sorte qu'il faut comprendre que le rotor 10 et les hélices 6 sont en rotation dans des plans orthogonaux et non parallèles.

Avec cette configuration, cet hélicoptère hybride 1 est remarquable en ce que les vitesses de rotation des sorties des turbomoteurs, des hélices, du rotor et du système mécanique d'interconnexion sont proportionnelles entre elles, le rapport de proportionnalité étant constant quelle que soit la configuration de vol de l'hélicoptère hybride en conditions normales de fonctionnement de la chaîne cinématique intégrée.

Bien évidemment, des dispositifs particuliers, sortant du cadre de l'invention, sont activés lors de pannes mécaniques éventuelles.

Le procédé de commande et de régulation pour giravion comportant au moins un rotor principal de sustentation, au moins une hélice propulsive 6 à pas variable et au moins une source motrice pour entraîner le(s) rotor(s) principal (aux) et l'(les) hélice(s) 6, consiste à élaborer au moins une consigne pas moyen β*tcl* , pour l'(les) hélice(s) 6, en fonction d'un ordre de commande de variation de poussée *Tcl* et en fonction de la puissance consommée par l'(les) hélice(s) 6.

Le procédé conforme à l'invention consiste à définir différents modes de fonctionnement.

Parmi les modes de fonctionnement, il y a un mode forcé dans lequel, en cas de perte totale de puissance du ou des moteur(s), le pas moyen β est forcé automatiquement sur commande du pilote, à une valeur de pas calculée. Le mode forcé est engagé sur commande prioritaire du pilote.

Dans ce mode forcé, la valeur du pas moyen β est telle que $\beta = \beta_0 + Arctg\left(\dfrac{TAS}{0,75.\Omega.R}\right) + I(Tcl)^{-5,+5}$,

où $\beta_0$ est une constante, $R$ étant le rayon des hélices 6, $\Omega$ étant la vitesse de rotation des hélices, TAS étant la vitesse air vraie de l'aéronef et $I(Tcl)^{-5,+5}$ étant l'intégrale de la fonction *Beep(Tcl)* valant -1, 0 ou +1, écrêtée à -5° et à +5°, indiquant la possibilité pour le pilote de modifier le pas moyen en actionnant la commande de variation de poussée *Tcl* avec une valeur de pas comprise entre +5° et -5°.

La constante $\beta_0$ est la valeur du pas des hélices 6 pour laquelle la poussée est nulle, à vitesse TAS nulle.

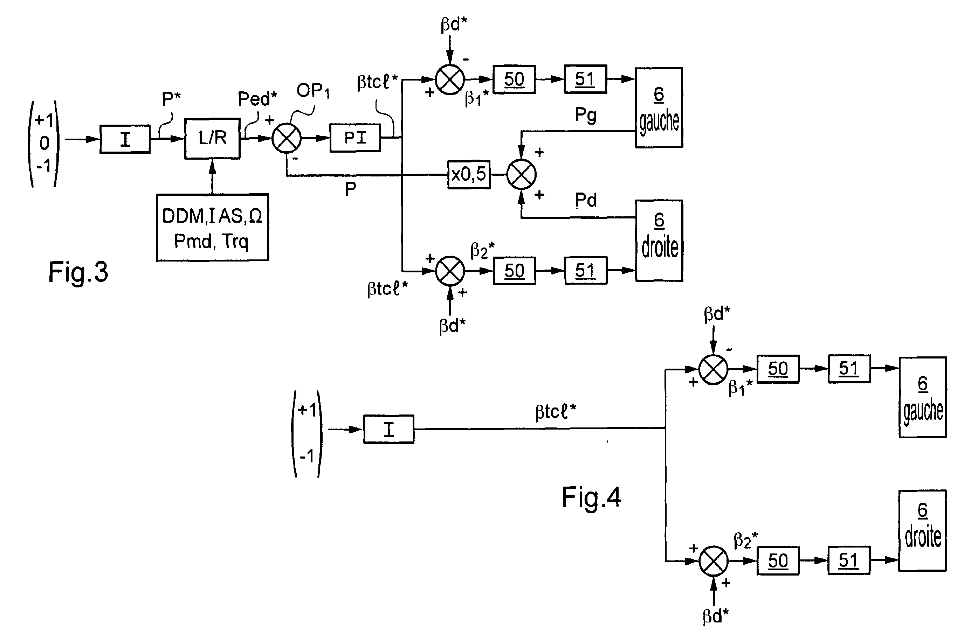

Une première variante de mise en oeuvre du procédé conforme à l'invention est illustrée aux figures 2 et 3.

Parmi ces modes, il y a aussi un mode direct, tel qu'illustré à la figure 2, dans lequel la valeur du pas moyen β résulte directement d'une fonction Beep(Tcl) à trois états -1,0,+1, c'est-à-dire d'un ordre de commande *Tcl.*

Le mode direct est engagé automatiquement lorsque le pas moyen β de l'hélice 6 ou des hélices 6 est inférieur à une première valeur β*tcl* 1 ou lorsque la puissance consommée au niveau de la (des) hélice(s) est inférieure à une seconde valeur *Pthr1.*

L'ordre de commande de variation de poussée *Tcl* est obtenu par un actionnement d'un levier *Tcl* ou par l'actionnement d'une commande impulsionnelle à trois états -1, 0, +1 de la fonction Beep(Tcl).

La consigne de pas moyen β*tcl** correspondant à la commande de variation de poussée est par exemple directement issue d'un intégrateur I qui reçoit en entrée un état de la commande Beep($Tcl$) du pilote. La consigne de pas moyen $\beta tcl^*$ est ensuite corrigée avec le pas différentiel $\beta d^*$ à droite et gauche pour obtenir la consigne de pas finale gauche $\beta 1^*$ et droite $\beta 2^*$, destinées chacune à un actionneur 50 électrique ou hydraulique. Les actionneurs 50 pilotent ensuite une servocommande de pas 51.

Parmi les modes conformes à l'invention, on trouve également un mode régulé, dans lequel on régule la puissance consommée par les hélices 6 ou l'hélice 6, en fonction d'une consigne de puissance issue d'une commande de variation de poussée $Tcl$.

Selon la première variante de mise en oeuvre, le mode régulé est engagé automatiquement lorsque d'une part le pas moyen $\beta$ est supérieur à une troisième valeur $\beta tcl\,2$ et d'autre part lorsque la puissance consommée $P$ au niveau de l'hélice 6 ou des hélices 6, est supérieure à une quatrième valeur $Pthr2$.

Les valeurs $Pthr2,\ \beta tcl\,2,\ Pthr1\ et\ \beta tcl\,1$ sont déterminées par une analyse, connue en tant que telle, de la polaire des hélices 6. L'analyse de la polaire des hélices 6 consiste à déterminer la puissance consommée des hélices 6 en fonction du pas et à vitesse de rotation constante. On obtient une courbe différente pour chaque vitesse d'avancement de l'aéronef. A titre d'exemple, lorsque la vitesse d'avancement diminue, la puissance consommée augmente. Il convient donc de contrôler ce paramètre afin de ne pas dépasser des limites prédéfinies.

On pourra se reporter par exemple à la figure 3, illustrant la chaîne fonctionnelle de commande de pas pour des hélices 6 propulsives, en mode régulé et en vol croisière, selon la première variante de mise en oeuvre.

Le procédé conforme à l'invention comporte également un mode protégé, lequel est activé dans le cadre des différents autres modes de fonctionnement hormis le mode forcé, lorsque l'un au moins de différents paramètres physiques limitants a atteint ou dépassé sa limite correspondante.

Selon le mode protégé, on diminue automatiquement la consigne de pas moyen $\beta tcl$.

Le mode protégé est activé lorsqu'une au moins des conditions suivantes sur les paramètres physiques limitants $IAS$, $DDM$, $\Omega$, $PP1max$, $Ptot$ est remplie :

- $IAS \geq VNE,$

- $DDM \leq 10\%,$

- $\Omega - \Omega^* < -0,6\ rad/s,$

- $PP1max > (Trqmax\_aut \times \Omega),$

- $Ptot > Pmd,$

avec $Trqmax\_aut$ étant le couple maximal admissible par la chaîne de transmission, $PP1max$ étant la valeur maximale des puissances actuelles des hélices (6) droite et gauche, $Ptot$ étant la puissance totale consommée par les hélices propulsives, $Pmd$ étant la puissance maximale disponible au niveau moteur pour les hélices propulsives, $IAS$ étant la vitesse air indiquée, $VNE$ étant la vitesse air maximale autorisée, $\Omega$ étant la vitesse de rotation des hélices propulsives, $\Omega^*$ étant la consigne de vitesse de rotation desdites hélices et $DDM$ étant la marge actuelle de débattement à piquer de la commande cyclique longitudinale exprimée en % de l'amplitude totale de débattement.

La consigne de vitesse de rotation $\Omega^*$ peut être considérée comme une constante pour des hélicoptères classiques ou des aéronefs conformes à l'invention. Il existe cependant des méthodes, connues en tant que telles, de calcul et/ou de détermination de la consigne de vitesse de rotation des hélices propulsives. Pour certaines applications, à vitesse de l'aéronef constante, $\Omega^*$ varie en fonction des conditions atmosphériques telles que l'altitude et la température.

Selon la première variante illustrée par exemple à la figure 3, le procédé conforme à l'invention consiste, dans le cadre du mode protégé, à utiliser une fonction de limitation/régulation de la consigne de puissance $P^*$ et une correction proportionnelle intégrale PI, pour déterminer la consigne de pas moyen $\beta tcl^*$, en mode régulé, selon un algorithme déterminé.

Les instructions provenant d'une commande beep $Tcl$ passent dans un intégrateur I, avant d'être corrigées ou diminuées par un limiteur/régulateur L/R. Ce dernier permet de réguler et de corriger les instructions de poussée, c'est-à-dire la consigne de puissance $P^*$, en fonction de limites prédéterminées se rapportant à la marge actuelle de débattement à piquer de la commande cyclique longitudinale exprimée en % de l'amplitude totale de débattement $DDM$, à la vitesse air indiquée $IAS$, à la puissance maximale disponible $Pmd$ pour les hélices 6 propulsives, au couple de transmission disponible $Trq$ ou à la vitesse de rotation $\Omega$ des rotors des hélices 6.

Le signal délivré par le limiteur/régulateur L/R, correspondant le cas échéant à la consigne de puissance écrêtée ou diminuée $P_{ed}^*$, est ensuite diminué de la puissance moyenne P consommée par les hélices 6 gauche et droite, c'est-à-dire (Pg+Pd)/2, où Pg est la puissance consommée par l'hélice 6 gauche et Pd est la puissance consommée par l'hélice 6 droite. On obtient ensuite la valeur corrective de consigne de pas moyen $\beta tcl^*$ à appliquer aux hélices 6 et ce, selon une boucle de régulation de type proportionnel/intégral PI fonctionnant en continu. La puissance de consigne décrémentée ou diminuée $P_{ed}^*$ est égale à la puissance de consigne $P^*$ si aucune limite n'est atteinte ou dépassée. Un opérateur OP1 permet de calculer le terme $P_{ed}^*-P,$ auquel sera appliquée la correction proportionnelle/intégrale PI.

Le limiteur/régulateur L/R calcule et modifie le cas échéant, en mode croisière, la consigne de puissance $P^*$ selon un algorithme déterminé dans lequel:

- si l'instruction de poussée de l'hélice ou des hélices 6, en sortie de l'intégrateur I, est supérieure à la valeur

$$\frac{\Omega}{\Omega^*} \times Pmd$$, la consigne de puissance $P^*$ est limitée à cette valeur, $Pmd$ étant la puissance maximale disponible au niveau moteur pour les hélices propulsives, $\Omega$ et $\Omega^*$ étant respectivement la vitesse de rotation de l'(des) hélice(s) 6 et la consigne correspondante,

- si la marge actuelle de débattement à piquer de la commande cyclique longitudinale exprimée en % de l'amplitude totale de débattement $DDM$ est inférieure à 10%, la consigne de puissance $P^*$ est décrémentée de la valeur : $(DDM-10\%) \times PPgradddm + PPiddm \ x \int(DDM-10\%)dt$ jusqu'à restauration de la marge initiale, $PPgradddm$ et $PPiddm$ étant des constantes,

- si la vitesse air indiquée $IAS$ est supérieure à la vitesse air maximale autorisée $VNE,$ la consigne de puissance $P^*$ est décrémentée de la valeur : $(IAS-VNE) \times PPgradias + PPiias \times \int(IAS-VNE)dr$, $PPgradias$ et $PPiias$ étant des constantes,

- si la valeur maximale des puissances actuelles de l'(des) hélice(s) droite et gauche $PP1max$ est supérieure à la valeur $(Trqmax\_aut \times \Omega)$, la consigne de puissance $P^*$ est décrémentée de la valeur : $PP1max-(Trqmax\_aut \times \Omega)$, $Trqmax\_aut$ étant une constante se rapportant au couple maximal,

- si la valeur de $\Omega-\Omega^*$ est inférieure à -0,6 rad/s, la consigne de puissance $P^*$ est décrémentée de la valeur :

$PPgrad \Omega \times (\Omega-\Omega^*) + PPi\Omega \times \int(\Omega-\Omega^*)dr$, $PPgrad\Omega$ et $PPi\Omega$ étant des constantes.

Les constantes $PPgradddm$, $PPgradias$, $PPgrad \Omega$, $PPiddm$, $PPiias$ et $PPi\Omega$ sont déterminées par placement de mode d'une boucle fermée qui contrôle les hélices 6 et qui est incluse dans le système global de l'aéronef.

La constante $Trqmax\_aut$ est déterminée par exemple à l'aide d'un calcul sur la chaîne de transmission.

Une seconde variante préférée de mise en oeuvre du procédé conforme à l'invention est illustré aux figures 4 à 10.

Le mode direct est engagé lorsque l'ordre de commande de variation de poussée $Tcl$ est obtenu par l'utilisation d'une commande impulsionnelle à trois états -1, 0, +1, à savoir la fonction Beep(Tcl), en actionnant les état +1 ou -1.

Le mode régulé est engagé lorsqu'on a $P > Pseuil$ concomitamment à l'absence d'ordre de commande de variation de poussée $Tcl$, en activant l'état 0 de la commande impulsionnelle à trois états -1, 0, +1, $P$ étant la puissance courante aux hélices et $Pseuil$ étant une constante choisie grâce à une analyse des polaires des hélices 6 propulsives.

La figure 4 illustre le mode direct dans cette seconde variante de mise en oeuvre du procédé, en l'absence de protection, c'est-à-dire dans une phase de vol où les valeurs courantes d'un certain nombre de paramètres de vol sont éloignées de leurs valeurs limites.

Par l'actionnement de la commande Beep($Tcl$), on active l'état +1 ou -1 afin de générer un signal transmis à un intégrateur I. Ce dernier délivre en sortie une consigne de pas moyen β$tcl^*$ destinée aux hélices 6.

La correction liée au pas différentiel β$d^*$ connue en tant que telle, n'est plus décrite, mais il est évident qu'elle intervient pour déterminer les consignes de pas β1*, β2* des hélices 6 gauche et droite.

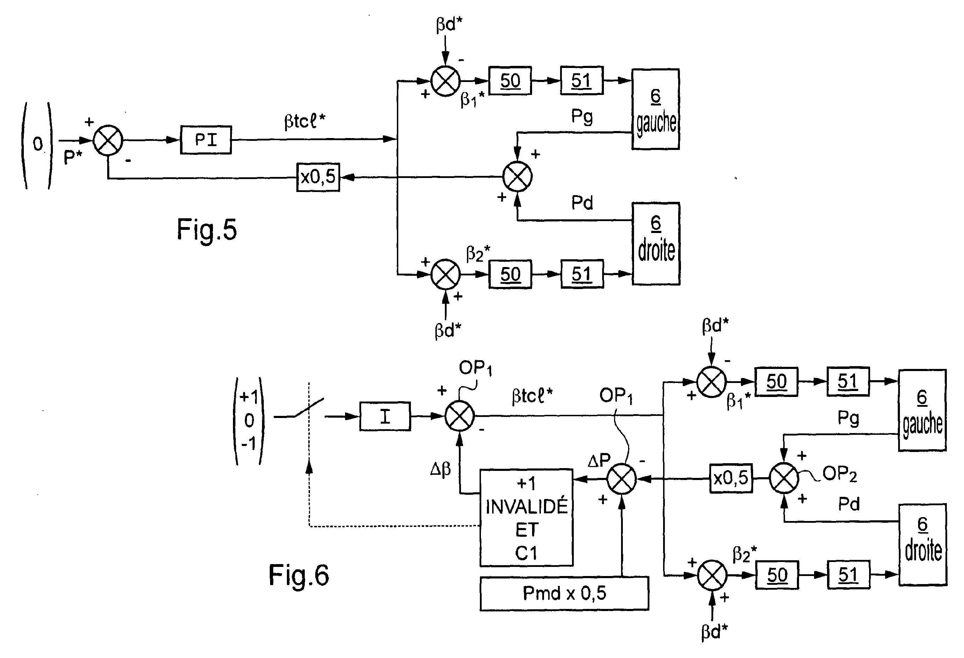

La figure 5 illustre le mode régulé dans la seconde variante de mise en oeuvre du procédé, en l'absence de protection, c'est-à-dire dans une phase de vol où les valeurs courantes d'un certain nombre de paramètres de vol sont éloignées de leurs valeurs limites.

En l'absence d'activation des états -1 et +1,, le mode régulé est engagé automatiquement lorsque $P>Pseuil,$ $Pseuil$ étant une constante choisie grâce à une analyse des polaires des hélices 6 propulsives.

La consigne de puissance $P^*$, correspondant à la dernière puissance de consigne avant l'engagement du mode régulé, est diminuée de la valeur moyenne $P= (Pg+Pd)/2$ des puissances $Pg$ et Pd consommée respectivement par les hélices 6 gauche et droite. Les puissances $Pg$ et $Pd$ sont mesurées ou calculées.

L'écart entre la puissance de consigne $P^*$ et la puissance consommé $P$ est ensuite transmis à un correcteur proportionnel/intégral PI, qui transforme ledit écart en consigne de pas moyen β$tcl^*$. On obtient ainsi une boucle de régulation permettant de corriger en continu la commande de pas moyen en délivrant une consigne de pas moyen β*tcl** correspondante.

Le procédé conforme à l'invention consiste, dans la seconde variante, à définir un mode à pas constant dans lequel, le pas moyen β de la ou des hélices 6 propulsives est constant.

Selon un exemple de mise en oeuvre du procédé conforme à l'invention, le mode à pas constant est engagé lorsqu'on a *P≤Pseuil* concomitamment l'état 0 des états -1,0,+1 de la commande impulsionnelle de variation de poussée *Tcl* est activé, *P* étant la puissance courante aux hélices et *Pseuil* étant une constante choisie grâce à une analyse des polaires des hélices 6 propulsives.

Selon la seconde variante conforme à l'invention, le procédé consiste dans le cadre du mode protégé, à utiliser au moins une boucle de surveillance d'un paramètre physique limitant, à vérifier si la limite se rapportant au dit paramètre est atteinte ou dépassée et dans l'affirmative maintenir l'activation du mode protégé.

Selon cette variante, le procédé consiste à choisir dans l'ordre de priorité de 1 à 5 suivant, le paramètre physique limitant pour lequel la limite correspondante est atteinte ou dépassé et pour lequel la boucle de surveillance est activée, à savoir :

1/ la vitesse de rotation $\Omega$ de la ou des hélices (6),

2/ la puissance moteur disponible pour les hélices (6), *Pmd,*

3/ le couple de transmission, *Trq,*

4/ la marge actuelle de débattement à piquer de la commande cyclique longitudinale exprimée en % de l'amplitude totale de débattement, *DDM,*

5/ la vitesse air indiquée, *IAS.*

Le mode protégé consiste à utiliser au moins un paramètre de vol se rapportant à la marge de puissance ΔP disponible ou à la marge de couple Δ*Trq* disponible pour écrêter ou diminuer l'ordre de commande si Δ*P* <0 ou si Δ*Trq* <0 et déterminer ainsi une consigne de pas moyen β*tcl* * compatible avec un prélèvement de puissance de l'hélice ou des hélices, ne dépassant pas la marge de puissance disponible ou la marge de couple disponible, l'état +1 de la commande impulsionnelle de la fonction Beep(*Tcl*) étant par ailleurs inhibé.

Selon un exemple de mise en oeuvre du procédé conforme à l'invention, le terme d'écrêtage est $\dfrac{\partial \beta}{\partial P} \times \Delta P$

si $\Delta$P <0 ou $\dfrac{\partial \beta}{\partial Trq} \times \Delta Trq$ si $\Delta Trq$ <0.

Le mode protégé consiste également à utiliser au moins un paramètre de vol se rapportant à la marge de la vitesse de rotation ΔΩ disponible pour le rotor de l'hélice ou des hélices 6, à la marge de la vitesse air indiquée Δ*IAS* disponible ou à l'écart de marge actuelle de débattement à piquer de la commande cyclique longitudinale exprimée en % de l'amplitude totale de débattement ΔDDM=DDM-10%, pour effectuer une correction proportionnelle/intégrale PI sur ledit paramètre.

Si ΔΩ<-0,6 rad/s ou si Δ*IAS* <0 ou si Δ*DDM* <0, on décrémente l'ordre de commande avec le résultat de la correction proportionnelle/intégrale PI, pour déterminer une consigne de pas moyen β*tcl* * compatible avec un prélèvement de puissance de l'hélice ou des hélices, ne dépassant pas la marge de puissance disponible, l'état +1 de la commande impulsionnelle étant par ailleurs inhibé.

Selon un exemple de mise en oeuvre conforme à l'invention, le procédé consiste :

- si la marge actuelle de débattement à piquer de la commande cyclique longitudinale exprimée en % de l'amplitude totale de débattement *DDM* est inférieure à 10%, la consigne de pas moyen β*tcl* * est décrémentée de la valeur : *(DDM-10)xPPgradddm+PPiddm* $\times$ ∫*(DDM - 10%)dt, PPgradddm* et *PPiddm* étant des constantes,

- si la vitesse air *IAS* est supérieure à la vitesse air maximale autorisée *VNE,* la consigne de pas moyen β*tcl* * est décrémentée de la valeur : *(IAS-VNE)*$\times$ *PPgradias + PPiias* $\times$ ∫*(IAS - VNE)dt, PPgradias* et *PPiias* étant des constantes,

- si la valeur de Ω-Ω* est inférieure à -0,6 rad/s, consigne de pas moyen β*tcl* * est décrémentée de la valeur :

$PPgrad\Omega$ x $(\Omega - \Omega^*)$ + $PPi\Omega$ x $\int(\Omega - \Omega^*)dr$, $PPgrad\Omega$ et $PPi\Omega$ étant des constantes.

Une fois engagé ou activé, le mode protégé, dans une seconde variante, se substitue au mode de fonctionnement initial, par exemple le mode régulé ou le mode direct, jusqu'au rétablissement des conditions de fonctionnement optimales.

La figure 6 illustre dans le cadre de la seconde variante, une chaîne fonctionnelle d'un exemple de conception du système de commande et de régulation conforme à l'invention, mettant en oeuvre le mode protégé. Dans ce mode protégé, on traduit la marge de puissance disponible *Pmd* pour les hélices 6, en pas moyen et on écrête, si nécessaire, pour diminuer une consigne de pas moyen β*tcl\**. Cette consigne interdit une commande de pas moyen aboutissant à un prélèvement de puissance trop important au niveau des hélices 6.

Selon la figure 6, le signal issu d'une commande Beep(*Tcl*), passe dans un intégrateur I avant d'arriver sur un premier opérateur OP1 délivrant une consigne de pas moyen β*tcl\**.

Cet opérateur OP1 permet également, si nécessaire, de corriger la consigne de pas issue du Beep(*Tcl*) et de l'intégrateur I, avec une valeur corrective Δβ appelée aussi terme d'écrêtage. L'opérateur OP1 permet de délivrer en sortie, le résultat d'une soustraction de deux valeurs d'entrée.

Un autre opérateur OP2 permet de délivrer en sortie, le résultat d'une addition de deux valeurs d'entrée Pg et Pd.

La valeur corrective utilisée pour la diminution ou l'écrêtage de la consigne de pas, dépend de la différence $\Delta P = (Pmd \times 0,5) - P$ calculée, *P* étant égal à *(Pg+Pd)/2,* soit la moitié de la puissance totale consommée par les deux hélices 6 et *Pmd* étant la puissance maximale disponible pour lesdites hélices 6. Cette différence $\Delta P$ est calculée par un second opérateur OP1.

Si $\Delta P \geq 0$, la valeur corrective Δβ de la consigne de pas moyen β*tcl\** est nulle et le système de régulation sort du mode protégé.

Si βP<0, la valeur corrective Δβ de la consigne de pas moyen β*tcl\** est $\dfrac{\partial \beta}{\partial P} \times \Delta P$, $\dfrac{\partial \beta}{\partial P}$ représentant le variation de pas par rapport à la variation de puissance consommée. En outre, l'activation de l'état +1 est inhibée, seule l'activation de l'état -1 étant possible.

La détermination de cette valeur corrective Δβ est effectuée par un calculateur/comparateur C1 associé au second opérateur OP1, calculant $\Delta P$, ou tout autre moyen permettant de faire une comparaison et de transmettre un signal image de cette comparaison. Le calculateur/comparateur C1 permet par exemple de déterminer le terme $\dfrac{\partial \beta}{\partial P}$ ainsi que le signe du terme $\Delta P$.

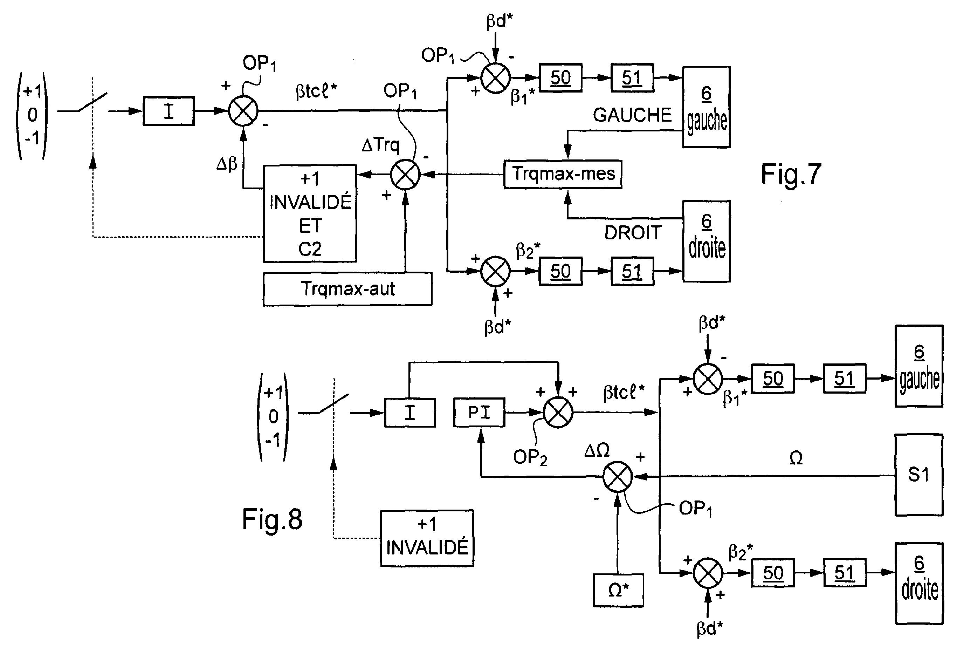

La figure 7 illustre une variante de protection dans le cadre de la mise en oeuvre du procédé conforme à l'invention. Il s'agit du mode protégé, avec une protection se basant sur la marge de couple $\Delta\,Trq$ disponible pour les hélices 6.

La marge de couple $\Delta\,Trq$ correspond à la différence entre le couple maximal autorisé *Trqmax_aut* pour une hélice 6 et la valeur maximale des couples mesurés ou calculés *Trqmax_mes* pour les deux hélices 6 gauche et droite.

La valeur corrective Δβ utilisée pour la diminution ou l'écrêtage de la consigne de pas moyen, dépend de la différence β *Trq= Trqmax_aut - Trqmax_mes,* telle que calculée.

Si $\Delta\,Trq \geq 0$, la valeur corrective Δβ de la consigne de pas moyen est nulle et le système de régulation sort du mode protégé.

Si $\Delta\,Trq <0$, la valeur corrective Δβ de la consigne de pas moyen est $\dfrac{\partial \beta}{\partial Trq} \times \Delta Trq$, $\dfrac{\partial \beta}{\partial Trq}$ représentant la variation de pas par rapport à la variation de couple. En outre, l'activation de l'état +1 est inhibée, seule l'activation de l'état -1 étant possible.

La détermination de cette valeur corrective Δβ est effectuée par un calculateur/comparateur C2, associé au second opérateur OP1, calculant $\Delta\,Trq,$ ou tout autre moyen permettant de faire une comparaison et de transmettre un signal image de cette comparaison. Le calculateur/comparateur C2 permet par exemple de déterminer le terme $\dfrac{\partial \beta}{\partial Trq}$ ainsi que le signe de $\Delta\,Trq.$

Pour déterminer les termes $\dfrac{\partial \beta}{\partial Trq}$ et $\dfrac{\partial \beta}{\partial P}$ on procède par exemple de la façon suivante :

- a) on trace un réseau de courbes D1, D2, D3 dans un diagramme présentant en abscisse le pas β0.75 d'une pale des hélices 6',6" à une distance égale à 0.75 fois l'envergure R de cette pale et en ordonnée le coefficient de puissance CP des première et deuxième hélices 6, chaque courbe D1, D2, D3 étant établie à un coefficient d'avancement λ1, λ2, λ3 donné, puis

- b) on détermine une équation intermédiaire à partir du réseau de courbes, donnant le coefficient de puissance *CP* en fonction dudit pas β0.75 d'une pale d'une hélice à une distance égale à 0.75 fois l'envergure R de cette pale, et du coefficient d'avancement.

On rappelle que le coefficient de puissance CP d'une hélice est égal à :

$$CP = \frac{P}{0.5 \times \rho \times \pi \times R^2 \times U^3}$$

Avec P représentant la puissance de l'hélice, ρ la densité de l'air, R l'envergure d'une pale de l'hélice et U la vitesse de l'extrémité libre d'une pale de l'hélice.

Ainsi, lors de l'étape b), on établit par essais le réseau de courbes D1, D2, D3. Chaque courbe D1, D2, D3 est établie à un coefficient d'avancement λ*1*, λ*2*, λ*3* prédéterminé, chaque coefficient d'avancement λ*1*, λ*2*, λ*3* étant égal au quotient d'une vitesse air vraie *TAS* de l'hélicoptère hybride par la vitesse *U* de l'extrémité libre de la pale, ladite vitesse *U* de l'extrémité libre de la pale étant égale au produit de la vitesse de rotation Ω d'une hélice par son envergure R.

On comprend également qu'un nombre plus important de courbes peut être utilisé.

In suffit alors de mettre en oeuvre une méthode mathématique usuelle, de régression polynomiale par exemple, pour déterminer ladite équation intermédiaire *CP*=f(β0.75, λ).

Ensuite, on détermine une première équation donnant un gradient de puissance en fonction du pas *GRD* en fonction de la dérivée partielle $\dfrac{\partial CP}{\partial \beta}$ de ladite équation intermédiaire par rapport au pas. Ainsi la première équation est :

$$GRD = \frac{\partial P}{\partial \beta} = 0.5 \times \rho \times \pi \times R^2 \times U^3 \times \frac{\partial CP}{\partial \beta}(\beta, \lambda)$$

avec ρ densité de l'air, et « x » le signe de la multiplication.

La première équation est alors stockée dans une mémoire d'un moyen de calcul.

Dans ces conditions, on met en oeuvre en vol les étapes suivantes en temps réel.

Lors d'une étape c), le moyen de calcul détermine un gradient de puissance en fonction du pas *GRD* en temps réel à l'aide de la première équation, stocké dans la mémoire, en calculant la valeur de ladite dérivée partielle au pas moyen actuel β*actuel* et au coefficient d'avancement actuel λ*actuel* déterminés en temps réel en vol. Plus précisément, le gradient de puissance en fonction du pas, *GRD* actuel, est égal à la valeur de ladite première équation au pas moyen actuel λ*actuel,* à la vitesse actuelle *Uactuel* de l'extrémité libre de la pale, à la densité de l'air actuelle ρ*actuel* et au coefficient d'avancement actuel λ*actuel* soit à :

$$GRD = 0.5 \times \rho actuel \times \pi \times R^2 \times Uactuel^3 \times \frac{\partial CP}{\partial \beta}(\beta actuel, \lambda actuel)$$

La même procédure peut être répétée pour le terme, $\dfrac{\partial \beta}{\partial Trq}$, dans la mesure où *P= Trq*×Ω et par conséquent

$$\frac{\partial Trq}{\partial \beta} = \frac{\partial P}{\partial \beta} \times \frac{1}{\Omega}.$$

La figure 8 illustre une variante de protection dans le cadre de la mise en oeuvre du procédé conforme à l'invention. Il s'agit du mode de protection se basant sur la vitesse de rotation Ω du rotor des hélices 6.

Le procédé consiste à utiliser le paramètre de vol se rapportant à l'écart $\Delta\Omega=\Omega-\Omega^*$ entre la vitesse de rotation Ω des rotors des hélices 6 et la consigne $\Omega^*$ correspondante, pour effectuer une correction proportionnelle intégrale PI sur ledit paramètre. Le terme $\Delta\Omega$ est calculé par un premier opérateur OP1.

Si le terme $\Delta\Omega,< -0,6$ rad/s on décrémente l'ordre de commande avec le résultat de la correction proportionnelle/intégrale PI, à savoir $PPgrad\Omega \times(\Omega-\Omega^*) + PPi\Omega \times \int(\Omega-\Omega^*)dr$, pour déterminer une consigne de pas moyen $\beta tcl ^*$. Un autre opérateur OP2 permet d'additionner le résultat de la correction proportionnelle/intégrale PI avec une commande issue de l'intégrateur I associé au Beep(*Tcl*). L'état +1 de la commande impulsionnelle Beep(*Tcl*) est par ailleurs inhibé.

Cette consigne sera alors compatible avec un prélèvement de puissance de l'hélice ou des hélices 6 ne dépassant pas la marge de puissance disponible. La vitesse de rotation Ω est par exemple mesurée à l'aide d'un capteur S1.

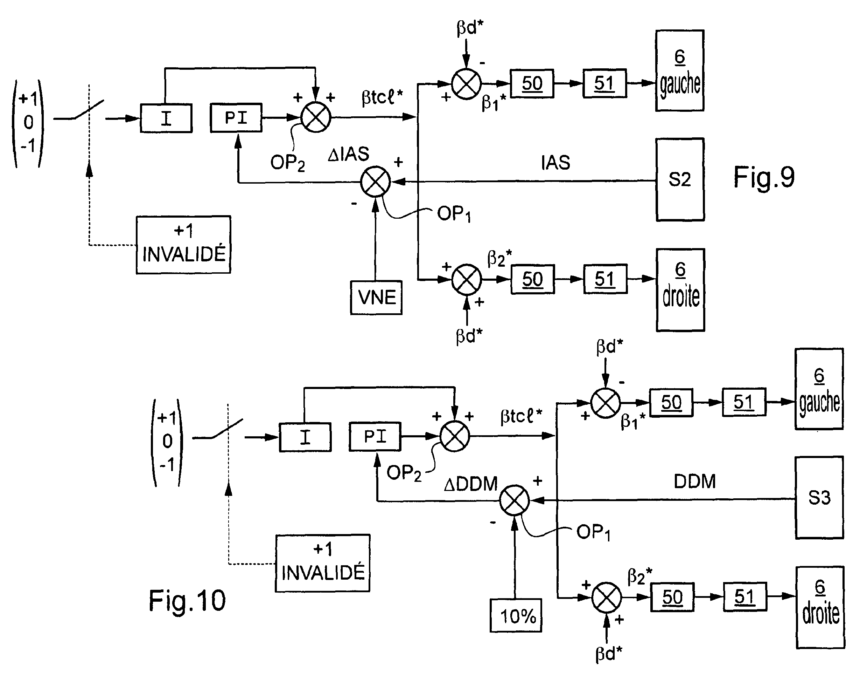

La figure 9 illustre une variante de protection dans le cadre de la mise en oeuvre du procédé conforme à l'invention. Il s'agit du mode protégé, avec une protection se basant sur la vitesse air indiquée *IAS*.

Le procédé consiste à utiliser le paramètre de vol se rapportant à l'écart $\Delta IAS=IAS-VNE$ entre la vitesse air indiquée *IAS* et la vitesse air maximale autorisée *VNE,* calculé par le premier opérateur OP1, pour effectuer une correction proportionnelle/intégrale PI sur ledit paramètre.

Si le terme $\Delta IAS <0$, on décrémente l'ordre de commande avec le résultat de la correction proportionnelle/intégrale PI, à savoir *(IAS-VNE)x PPgradias + PPiias x $\int$(IAS-VNE)dr,* pour déterminer une consigne de pas moyen $\beta tcl ^*$. Un autre opérateur OP2 permet d'additionner le résultat de la correction proportionnelle/intégrale PI avec une commande issue de l'intégrateur I associé au Beep(Tcl). L'état +1 de la commande impulsionnelle Beep(Tcl) est par ailleurs inhibé.

Cette consigne sera compatible avec un prélèvement de puissance des hélices 6 ne dépassant pas la marge de puissance disponible. La vitesse air indiquée IAS est par exemple mesurée à l'aide d'un capteur S2.

La figure 10 illustre une variante de protection dans le cadre de la mise en oeuvre du procédé conforme à l'invention. Il s'agit du mode protégé, avec une protection se basant sur la marge actuelle de débattement à piquer de la commande cyclique longitudinale exprimée en % de l'amplitude totale de débattement DDM correspondant à la commande cyclique longitudinale mesurée par exemple avec un capteur S3.

Le procédé consiste à utiliser le paramètre de vol se rapportant à l'écart de marge actuelle de débattement à piquer de la commande cyclique longitudinale exprimée en % de l'amplitude totale de débattement $\Delta DDM=DDM-10\%,$ calculé par un premier opérateur OP1, pour effectuer une correction proportionnelle/intégrale PI sur ledit paramètre. Si le terme $\Delta DDM <0$, on décrémente l'ordre de commande avec le résultat de la correction proportionnelle/intégrale PI, à savoir *(DDM-10)xPPgradddm+PPiddm x $\int$(DDM-10%)dt,* pour déterminer une consigne de pas moyen $\beta tcl ^*$. Un autre opérateur OP2 permet d'additionner le résultat de la correction proportionnelle/intégrale PI avec une commande issue de l'intégrateur I associé au Beep(Tcl). L'état +1 de la commande impulsionnelle est par ailleurs inhibé.

Cette consigne sera alors compatible avec un prélèvement de puissance de l'hélice ou des hélices 6 ne dépassant pas la marge de puissance disponible.

Selon un exemple de mise en oeuvre du procédé de commande et de régulation conforme à l'invention, la puissance consommée *P* par l'hélice ou les hélices 6 est estimée par un algorithme spécifique, en fonction des pas $\beta 1, \beta 2$ des hélices 6, de la vitesse air vraie *TAS*, de la vitesse de rotation des hélices Ω des hélices 6 et de la densité de l'air σ.

Selon un exemple de mise en oeuvre du procédé de commande et de régulation conforme à l'invention, la puissance consommée *P* par l'hélice ou les hélices 6 est estimée par un algorithme spécifique, en fonction des pas $\beta 1, \beta 2$ des hélices 6, de la vitesse air vraie *TAS*, de la consigne de vitesse de rotation des hélices $\Omega^*$ des hélices 6 et de la densité de l'air σ.

Selon un autre exemple de mise en oeuvre, la puissance consommée par une ou plusieurs hélices (6) est mesurée par l'intermédiaire de capteurs du genre couplemètres sur la transmission des hélices (6).

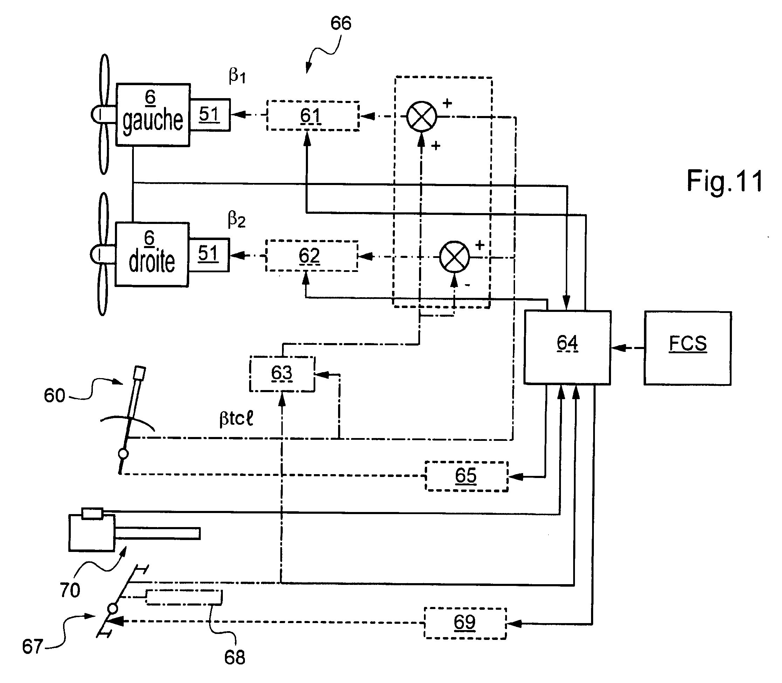

La figure 11 est une illustration d'un exemple de réalisation d'une architecture de la chaîne de commande de pas des hélices 6 dans laquelle intervient le système de régulation conforme à l'invention.

Le système de commande et de régulation conforme à l'invention, comprend une chaîne mécanique de secours, pour la commande en mode direct du pas de l'hélice ou des hélices 6 propulsive(s) ainsi qu'une chaîne électrique pour la commande du pas de l'hélice ou des hélices 6 propulsive(s), ladite chaîne électrique comportant des moyens pour assurer les respect des limitations.

La chaîne mécanique, schématisée notamment par des lignes mixtes comprend :

- un levier Tcl 60 pour la commande du pas moyen $\beta tcl$,

- un palonnier 67 pour la commande du pas différentiel $\beta d,$

- un amortisseur de palonnier 68,

- un guignol à rapport variable 63, la variation étant fonction de la position du levier Tcl 60 pour diminuer l'autorité du palonnier 67 en fonction de la poussée,

- un combinateur/coupleur 66 pour sommer et soustraire le pas moyen $\beta tcl$ et le pas différentiel $\beta d$,

- et un système de bielles, câbles et poulies.

La chaîne électrique, schématisée notamment par des lignes pointillées comprend :

- un beep Tcl associé au levier de pas collectif 70,

- un premier vérin série 61 pour la commande du pas moyen $\beta tcl$ de l'hélice 6 gauche,

- un second vérin série 62 pour la commande du pas moyen $\beta tcl$ de l'hélice (6) droite,

- un premier vérin de trim 65 du levier Tcl 60,

- un second vérin de trim (69) du palonnier 67,

- un calculateur 64 recevant des informations du système de contrôle de vol (FCS) et établissant les lois de commande du pas des hélices 6,

- des moyens de mesure de la position des commandes du pilote sur le levier Tcl 60 et sur le palonnier 67,

- des liaisons électriques,

- et des moyens pour mesurer la position des vérins série 61,62.

Les vérins série 61, 62 permettent de façon connue, d'actionner les servocommandes de pas 51.

Les vérins de trim 65, 69 sont actionnés par l'intermédiaire du pilote automatique pour ajuster en temps réel les positions du levier Tcl 60 et du palonnier 67.

Selon un exemple de réalisation conforme à l'invention, le système de commande comporte des capteurs du genre couplemètres sur la transmission des hélices 6, pour mesurer la puissance consommée par les hélices 6. Ceci permet d'opérer une régulation directement sur la puissance consommée et mesurée aux niveaux des hélices 6.

La présente invention concerne également un programme de commande d'un giravion pour mettre en oeuvre le procédé de commande et de régulation. Ce programme comporte un code fixé sur un support tel qu'une mémoire ou matérialisé par un signal, le code étant lisible et/ou exécutable par au moins une unité de traitement de données telle qu'un processeur embarqué ou susceptible d'être embarqué sur un giravion, pour commander et/ou réguler le réglage du pas d'au moins une hélice propulsive, le code comportant des segments de code pour mettre en oeuvre respectivement des opérations caractéristiques ou étapes dudit procédé de commande et de régulation.

Le procédé conforme à l'invention, plus particulièrement décrit avec une application comportant un rotor principal et deux hélices 6 propulsives, est transposable sans difficultés à une application comportant une seule hélice 6 propulsive ou deux rotors principaux de sustentation sans sortir du cadre de la présente invention, comme définie dans les revendications.

Les systèmes avioniques embarqués comprennent différentes fonctionnalités de mesure et/ou de calcul pour fournir des valeurs de paramètres de vol utilisés dans le cadre de la présente invention comme définie dans les revendications. Ces fonctionnalités sont connues en tant que telles et ne sont par conséquent pas décrites.

**Revendications**

1. Procédé de commande et de régulation pour giravion comportant au moins un rotor principal de sustentation, au moins une hélice (6) propulsive à pas variable et au moins une source motrice pour entraîner le(s) rotor(s) principal (aux) et au moins une hélice (6), ledit procédé consistant à élaborer au moins une consigne de pas moyen $\beta tcl$ pour l'hélice (6) ou pour les hélices (6), en fonction d'un ordre de commande de variation de poussée $Tcl$ et en fonction de la puissance consommée par l'hélice (6) ou par les hélices (6),
**caractérisé en ce qu'**il consiste à définir différents modes de fonctionnement parmi lesquels :

- un mode direct, dans lequel la valeur du pas moyen résulte directement de l'ordre de commande de variation de poussée *Tcl*,
- un mode forcé, en cas d'autorotation du (des) rotor(s) principal(aux),dans lequel le pas moyen est forcé automatiquement sur commande du pilote, à une valeur de pas calculée,
- un mode régulé, dans lequel on régule la puissance consommée par l'hélice ou les hélices (6) en fonction d'une consigne de puissance issue d'une commande de variation de poussée *Tcl*,
- et un mode protégé, lequel est activé dans le cadre des différents autres modes de fonctionnement hormis le mode forcé, lorsque l'un au moins des différents paramètres physiques limitants a atteint ou dépassé sa limite correspondante, et dans lequel on diminue automatiquement la consigne de pas moyen β*tcl.*

**2.** Procédé selon la revendication 1, **caractérisé en ce qu'**il consiste à activer le mode protégé lorsqu'une au moins une des conditions suivantes sur les paramètres physiques limitants *IAS, DDM*, Ω, *PP1max, Ptot* est remplie :

- *IAS* ≥ *VNE,*
- *DDM* ≤ *10%,*
- (Ω-Ω*) <- *0,6* rad/s,
- *PP1max > (Trqmax_aut* x Ω),
- *Ptot > Pmd,*

avec *Trqmax_aut* étant le couple maximal admissible par la chaîne de transmission, *PP1max* étant la valeur maximale des puissances actuelles des hélices (6) droite et gauche, *Ptot* étant la puissance totale consommée par les hélices propulsives, *Pmd* étant la puissance maximale disponible au niveau moteur pour la (les) hélice(s) propulsives, *IAS* étant la vitesse air indiquée, *VNE* étant la vitesse air maximale autorisée, Ω étant la vitesse de rotation des hélices propulsives, Ω* étant la consigne de vitesse de rotation desdites hélices et *DDM* étant la marge actuelle de débattement à piquer de la commande cyclique longitudinale exprimée en % de l'amplitude totale de débattement.

**3.** Procédé selon la revendication 1 ou 2,
**caractérisé en ce que** le mode forcé est engagé sur commande prioritaire du pilote.

**4.** Procédé selon l'une quelconque des revendications 1 à 3,
**caractérisé en ce que** dans le mode forcé la valeur du pas moyen β*tcl* est telle que

$$\beta tcl = \beta_0 + Arctg\left(\frac{TAS}{0,75.\Omega.R}\right) + I(Tcl)^{-5,+5}$$

où $\beta_0$ est une constante, *R* étant le rayon du rotor des hélices, Ω étant la vitesse de rotation des hélices, TAS étant la vitesse air vraie de l'aéronef et $I(Tcl)^{-5,+5}$ étant l'intégrale de la fonction *Beep(Tcl),* valant 1, 0 ou -1, écrêtée à -5° et à +5°, indiquant la possibilité pour le pilote de modifier le pas moyen en actionnant la commande de variation de poussée *Tcl* avec une valeur de pas comprise entre +5° et -5°.

**5.** Procédé selon l'une quelconque des revendications 1 ou 4,
**caractérisé en ce que** le mode direct est engagé automatiquement lorsque le pas moyen de l'hélice ou des hélices est inférieur à une première valeur β*tcl 1* ou lorsque la puissance consommée *P* au niveau de l'hélice ou des hélices, est inférieure à une seconde valeur *Pthr1.*

**6.** Procédé selon l'une quelconque des revendications 1 à 5,
**caractérisé en ce que** le mode régulé est engagé automatiquement lorsque d'une part le pas moyen est supérieur à une troisième valeur constante β*tcl 2* et d'autre part lorsque la puissance consommée *P* au niveau de l'hélices ou des hélices est supérieure à une quatrième valeur constante *Pthr2.*

**7.** Procédé selon l'une quelconque des revendications 1 à 6,
**caractérisé en ce qu'**il consiste dans le cadre du mode protégé à utiliser une fonction de limitation/régulation de la consigne de puissance *P* ainsi qu'une correction proportionnelle intégrale PI sur (*P*-P*) ou $\left(P_{ed}^{\bullet} - P\right),$ pour déterminer la consigne de pas moyen β*tcl*,* en mode régulé, selon un algorithme déterminé, *P* étant la puissance consommée au niveau de l'hélice ou des hélices (6) et $P_{ed}^{\bullet}$ étant cette même consigne décrémentée ou diminuée.

**8.** Procédé selon la revendication 7,
**caractérisé en ce que** l'algorithme consiste :

- si l'instruction de poussée de l'hélice ou des hélices (6) est supérieure à la valeur $\dfrac{\Omega}{\dot\Omega} \times Pmd$ , la consigne de puissance $P^*$ est limitée à cette valeur, $Pmd$ étant la puissance maximale disponible au niveau moteur pour une ou plusieurs hélices (6), $\Omega$ et $\Omega^*$ étant respectivement la vitesse de rotation de l'hélice ou des hélices (6) et la consigne correspondante,

- si la marge actuelle de débattement à piquer de la commande cyclique longitudinale exprimée en % de l'amplitude totale de débattement $DDM$ est inférieure à 10%, la consigne de puissance $P^*$ est décrémentée de la valeur : $(DDM-10) \times PPgradddm + PPiddm \times \int (DDM-10\%)dt$, $PPgradddm$ et $PPiddm$ étant des constantes,

- si la vitesse air $IAS$ est supérieure à la vitesse air maximale $VNE$, la consigne de puissance $P^*$ est décrémentée de la valeur : $(IAS-VNE) \times PPgradias + PPiias \times \int (IAS-VNE)dt$, $PPgradias$ et $PPiias$ étant des constantes,

- si la valeur maximale des puissances actuelles des hélices (6) droite et gauche $PP1max$ est supérieure à la valeur $(Trqmax\_aut \times \Omega)$, la consigne de puissance $P^*$ est décrémentée de la valeur : $PP1max-(Trqmax\_aut \times \Omega)$, $Trqmax\_aut$ étant une constante,

- si la valeur de $\Omega-\Omega^*$ est inférieure à -0,6 rad/s, la consigne de puissance $P^*$ est décrémentée de la valeur :

$PPgrad\Omega \, x(\Omega-\Omega^*) + PPi\Omega \, x \, 1(\Omega-\Omega^*)dt$, $PPgrad\Omega$ et $PPi\Omega$ étant des constantes.

**9.** Procédé selon l'une quelconque des revendications 1 à 4,
**caractérisé en ce qu'**il consiste à définir un mode à pas constant dans lequel le pas moyen de la ou des hélices (6) propulsives est constant.

**10.** Procédé selon la revendication 9,
**caractérisé en ce que** le mode à pas constant est engagé lorsqu'on a $P \leq Pseuil$ concomitamment l'état 0 des états -1,0,+1 de la commande impulsionnelle de variation de poussée $Tcl$ est activé, P étant la puissance actuelle de l'hélice (6) ou des hélices (6) et $Pseuil$ étant une constante choisie grâce à une analyse des polaires des hélices propulsives.

**11.** Procédé selon l'une quelconque des revendications 1 à 4 ou selon la revendication 9 ou 10,
**caractérisé en ce que** le mode direct est engagé lorsque l'ordre de commande de variation de poussée $Tcl$ est obtenu par l'utilisation d'une commande impulsionnelle à trois états -1, 0, +1 en actionnant les état +1 ou -1.

**12.** Procédé selon l'une quelconque des revendications 1 à 4 ou 9 à 11,
**caractérisé en ce que** le mode régulé est engagé lorsqu'on a $P > Pseuil$ concomitamment à l'absence d'ordre de commande de variation de poussée $Tcl$, en activant l'état 0 de la commande impulsionnelle à tois états -1, 0, +1, $P$ étant la puissance actuelle de l'hélice (6) ou des hélices (6) et $Pseuil$ étant une constante choisie grâce à une analyse des polaires des hélices propulsives (6).

**13.** Procédé selon l'une quelconque des revendications 1 à 4 ou 9 à 12,
**caractérisé en ce qu'**il consiste dans le cadre du mode protégé à utiliser au moins une boucle de surveillance d'un paramètre physique limitant, à vérifier si la limite se rapportant au dit paramètre est atteinte ou dépassée et dans l'affirmative maintenir l'activation du mode protégé.

**14.** Procédé selon la revendication 13,
**caractérisé en ce qu'**il consiste à choisir dans l'ordre de priorité de 1 à 5 suivant, le paramètre physique limitant pour lequel la limite correspondante est atteinte ou dépassée et pour lequel la boucle de surveillance est activée, à savoir :

1/ la vitesse de rotation $\Omega$ de la ou des hélices (6),
2/ la puissance moteur disponible pour la (les) hélice(s) (6), $Pmd$,
3/ le couple de transmission, $Trq$,
4/ la marge actuelle de débattement à piquer de la commande cyclique longitudinale exprimée en % de l'amplitude totale de débattement, $DDM$,
5/ la vitesse air indiquée, $IAS$.

**15.** Procédé selon la revendication 13 ou 14,
**caractérisé en ce qu'**il consiste, dans le mode protégé, à utiliser au moins un paramètre de vol se rapportant à la marge de puissance ΔP disponible ou à la marge de couple Δ*Trq* disponible pour écrêter ou diminuer l'ordre de commande si Δ*P* <0 ou si Δ*Trq* <0 et déterminer ainsi une consigne de pas moyen β*tcl* * compatible avec un prélèvement de puissance de l'hélice ou des hélices, ne dépassant pas la marge de puissance disponible, l'état +1 de la commande impulsionnelle étant par ailleurs inhibé.

**16.** Procédé selon la revendication 15,

**caractérisé en ce qu'**il consiste à utiliser le terme d'écrêtage est $\dfrac{\partial \beta}{\partial P} \times \Delta P$ si ΔP<0 ou $\dfrac{\partial \beta}{\partial Trq} \times \Delta Trq$ si Δ*Trq*<0.

**17.** Procédé selon l'une quelconque des revendications 13 à 16,
**caractérisé en ce qu'**il consiste, dans le mode protégé, à utiliser au moins un paramètre de vol se rapportant à marge de la vitesse de rotation ΔΩ disponible pour le rotor de l'hélice ou des hélices (6), à la marge de la vitesse air indiquée Δ*IAS* disponible ou à l'écart de la marge actuelle de débattement à piquer de la commande cyclique longitudinale exprimée en % de l'amplitude totale de débattement *ADDM*=DDM-10%, pour effectuer une correction proportionnelle intégrale PI sur ledit paramètre et si ΔΩ <-0,6 ou si Δ*IAS* <0 ou si Δ*DDM* <0, décrémenter l'ordre de commande avec le résultat de la régulation proportionnelle intégrale PI, pour déterminer une consigne de pas moyen β*tcl* * compatible avec un prélèvement de puissance de l'hélice ou des hélices (6), ne dépassant pas la marge de puissance disponible, l'état +1 de la commande impulsionnelle étant par ailleurs inhibé.

**18.** Procédé selon la revendication 17,
**caractérisé en ce que** :

- si la marge de commande de cyclique longitudinale *DDM* est inférieure à 10%, la consigne de pas moyen β*tcl* * est décrémentée de la valeur : *(DDM-10)× PPgradddm + PPiddm × ∫(DDM-10%)dt, PPgradddm* et *PPiddm* étant des constantes,
- si la vitesse air *IAS* est supérieure à la vitesse air maximale autorisée *VNE,* la consigne de pas moyen β*tcl* * est décrémentée de la valeur : *(IAS-VNE)x PPgradias + PPiias x ∫(IAS-VNE)dt, PPgradias* et *PPiias* étant des constantes,
- si la valeur de Ω-Ω* est inférieure à -0,6 rad/s, la consigne de pas moyen β*tcl* * est décrémentée de la valeur :

*PPgradΩ x(Ω-Ω*) + PPiΩ x ∫(Ω-Ω*)dt, PPgradΩ* et *PPiΩ* étant des constantes.

**19.** Procédé selon l'une quelconque des revendications précédentes,
**caractérisé en ce que** la puissance consommée par l'hélice ou par les hélices (6) est estimée par un algorithme spécifique, en fonction des pas β1, β2 des hélices, de la vitesse air vraie *TAS,* de la vitesse de rotation des hélices Ω et de la densité de l'air σ.

**20.** Procédé selon l'une quelconque des revendications 1 à 18,
**caractérisé en ce que** la puissance consommée par l'hélice ou par les hélices (6) est estimée par un algorithme spécifique, en fonction des pas β1, β2 des hélices, de la vitesse air vraie *TAS,* de la consigne de vitesse de rotation des hélices Ω* et de la densité de l'air σ.

**21.** Procédé selon l'une quelconque des revendications 1 à 18,
**caractérisé en ce que** la puissance consommée par une ou plusieurs hélices (6) est mesurée par l'intermédiaire de capteurs du genre couplemètres sur la transmission des hélices (6).

**22.** Système de commande et de régulation pour giravion comportant au moins un rotor principal de sustentation, au moins une hélice (6) propulsive à pas variable et au moins une source motrice pour entraîner le(s) rotor(s) principal (aux) et l'hélice ou les hélices (6),
**caractérisé en ce qu'**il comprend des moyens comprenant un processeur pour mettre en oeuvre le procédé selon l'une quelconque des revendications 1 à 21.

**23.** Système de commande et de régulation selon la revendication 22,
**caractérisé en ce qu'**il comprend une chaîne mécanique de secours, pour la commande en mode direct du pas de l'(des) hélice(s) (6) propulsive(s) ainsi qu'une chaîne électrique pour la commande du pas de l'hélice ou des hélices (6) propulsives, ladite chaîne électrique comportant des moyens pour assurer les respect des limitations.

24. Système de commande et de régulation selon la revendication 23,
**caractérisé en ce que** la chaîne mécanique comprend :

- un levier Tcl (60) pour la commande du pas moyen βtcl,
- un palonnier (67) pour la commande du pas différentiel βd,
- un amortisseur de palonnier (68),
- un guignol à rapport variable (63), la variation étant fonction de la position du levier *Tcl* (60) pour diminuer l'autorité du palonnier (67) en fonction de la poussée,
- un combinateur/coupteur (66) pour sommer et soustraire le pas moyen β*tcl* et le pas différentiel β*d*,
- et un système de bielles, câbles et poulies.

25. Système de commande et de régulation selon la revendication 23 ou 24,
**caractérisé en ce que** la chaîne électrique comprend :

- un beep *Tcl* associé au levier de pas collectif (70),
- un premier vérin série (61) pour la commande du pas moyen β*tcl* de l'hélice (6) gauche,
- un second vérin série (62) pour la commande du pas moyen β*tcl* de l'hélice (6) droite,
- un premier vérin de trim (65) du levier *Tcl* (60),
- un second vérin de trim (68) du palonnier (67),
- un calculateur (64) recevant des informations du système de contrôle de vol FCS et établissant les lois de commande du pas des hélices (6),
- des moyens de mesure de la position des commandes du pilote sur le levier *Tcl* (60) et sur le palonnier (67),
- des liaisons électriques,
- et des moyens pour mesurer la position des vérins série (61,62).

26. Programme de commande d'un giravion pour mettre en oeuvre le procédé conforme à l'une quelconque des revendications 1 à 21,
**caractérisé en ce qu'**il comporte un code fixé sur un support tel qu'une mémoire ou matérialisé par un signal, le code étant lisible et/ou exécutable par au moins une unité de traitement de données telle qu'un processeur embarqué ou susceptible d'être embarqué sur un giravion, pour commander et/ou réguler le réglage du pas d'au moins une hélice propulsive, le code comportant des segments de code pour mettre en oeuvre respectivement des opérations caractéristiques ou étapes du procédé de commande et de régulation.

27. Aéronef du genre giravion, comportant un système de commande et de régulation conforme à l'une quelconque des revendications 22 à 25.

**Claims**

1. Control and regulation method for a rotorcraft having at least one main lift rotor, at least one variable-pitch propulsive propeller (6), and at least one power source for driving the main rotor(s) and at least one propeller (6), said method consisting of generating at least one mean pitch setpoint β*tcl* for the propeller(s) (6) as a function of a thrust variation control order *Tcl* and as a function of the power consumed by the propeller(s) (6),
**characterised in that** it consists of defining various operating modes, including:

- a direct mode, in which the value of the mean pitch results directly from the thrust variation control order *Tcl,*
- a forced mode, in the case of autorotation of the main rotor(s), in which the mean pitch is forced automatically under control of the pilot to a calculated pitch value,
- a regulated mode, in which the power consumed by the propeller(s) (6) is regulated as a function of a power setpoint from a thrust variation control *Tcl*,
- and a protected mode, which is activated in the various other operating modes apart from the forced mode, when at least one of various limiting physical parameters has reached or exceeded its corresponding limit, and in which the mean pitch setpoint β*tcl* is reduced automatically.

2. Method according to Claim 1,

**characterised in that** it consists of activating the protected mode when at least one of the following conditions concerning the limiting physical parameters *IAS, DDM,* $\Omega$, *PPlmax, Ptot,* is satisfied:

- *IAS* $\geq$ *VNE,*
- *DDM* $\leq$ *10%,*
- $(\Omega - \Omega^*) < -0.6$ rad/s,
- *PP1max > (Trqmax_aut* $\times$ $\Omega$),
- *Ptot > Pmd,*

where *Trqmax_aut* is the maximum torque admissible by the transmission chain, *PPlmax* is the maximum value of the current power of the right and left propellers (6), *Ptot* is the total power consumed by the propulsive propellers, *Pmd* is the maximum power available from the engine for the propulsive propeller(s), *IAS* is the indicated air speed, *VNE* is the maximum authorised air speed, $\Omega$ is the speed of rotation of the propulsive propellers, $\Omega^*$ is the speed of rotation setpoint of said propellers, and *DDM* is the current dive deflection margin of the longitudinal cyclic control expressed as a percentage of the total deflection amplitude.

3. Method according to Claim 1 or 2,
   **characterised in that** the forced mode is engaged on pilot override control.

4. Method according to any one of Claims 1 to 3,
   **characterised in that** in the forced mode, the value of the mean pitch $\beta tcl$ is such that

$$\beta tcl = \beta_0 + Arctg\left(\frac{TAS}{0.75\Omega R}\right) + I(Tcl)^{-5,+5}$$

where $\beta_0$ is a constant, *R* is the radius of the rotor of the propellers, $\Omega$ is the speed of rotation of the propellers, *TAS* is the true air speed of the aircraft, and $I(Tcl)^{-5,+5}$ is the integral of the function *Beep(Tcl)* having the value 1, 0, or -1, limited at -5° and at +5°, indicating that it is possible for the pilot to modify the mean pitch by actuating the thrust variation control *Tcl* with a pitch value lying between +5° and -5°.

5. Method according to either one of Claims 1 and 4,
   **characterised in that** the direct mode is engaged automatically when the mean pitch of the propeller(s) is less than a first value $\beta tcl\ 1$ or when the power *P* consumed by the propeller(s) is less than a second value *Pthr1.*

6. Method according to any one of Claims 1 to 5,
   **characterised in that** the regulated mode is engaged automatically when, on the one hand, the mean pitch is greater than a third constant value $\beta tcl\ 2$ and, on the other hand, the power P consumed by the propeller(s) is greater than a fourth constant value *Pthr2.*

7. Method according to any one of Claims 1 to 6,
   **characterised in that**, in the protected mode, it consists of using a limit/regulation function of the power setpoint $P^*$ together with a proportional-integral correction PI on $(P^*-P)$ or $(P_{ed}^*-P)$ to determine the mean pitch setpoint $\beta tcl^*$, in regulated mode, using a determined algorithm, where P is the power consumed by the propeller(s) (6) and $P_{ed}^*$ is the same setpoint decremented or decreased.

8. Method according to Claim 7,
   **characterised in that** the algorithm consists of the following:

   - if the thrust instruction for the propeller(s) (6) is greater than the value: $\frac{\Omega}{\Omega^*} \times Pmd$ , the power setpoint $P^*$ is limited to said value, where *Pmd* is the maximum available power from the engine for one or more propeller(s) (6), $\Omega$ and $\Omega^*$ are respectively the speed of rotation of the propeller(s) (6) and the corresponding setpoint,
   - if the current dive deflection margin of the longitudinal cyclic control expressed as a percentage of the total deflection amplitude *DDM* is less than 10%, the power setpoint $P^*$ is decremented by the value:

   *(DDM-10)* $\times$ *PPgradddm + PPiddm* $\times$ $\int$*(DDM-10%)dt,* where *PPgradddm* and *PPiddm* are constants,

- if the air speed *IAS* is greater than the maximum air speed *VNE*, the power setpoint *P\** is decremented by the value:

$$(IAS\text{-}VNE) \times PPgradias + PPiias \times \int(IAS\text{-}VNE)dt, \text{ where } PPgradias \text{ and } PPiias \text{ are constants,}$$

- if the maximum value of the current power of the right and left propeller(s) (6) *PPlmax* is greater than the value *(Trqmax_aut×Ω)*, the power setpoint *P\** is decremented by the value: *PPlmax-(Trqmax_aut×Ω),* where *Trqmax_aut* is a constant,
- if the value of Ω-Ω\* is less than -0.6 rad/s, the power setpoint *P\** is decremented by the value:

$$PPgrad\Omega \times (\Omega\text{-}\Omega^*) + PPi\Omega \times \int (\Omega\text{-}\Omega^*) \, dt, \text{ where } PPgrad\Omega \text{ and } PPi\Omega \text{ are constants.}$$

9. Method according to any one of Claims 1 to 4,
   **characterised in that** it consists of defining a constant pitch mode in which the mean pitch of the propulsive propeller (s) (6) is constant.

10. Method according to Claim 9,
    **characterised in that** the constant pitch mode is engaged when *P≤Pthreshold* while at the same time the 0 state of the states -1,0,+1 of the thrust variation pulse control *Tcl* is activated, where *P* is the current power of the propeller (s) (6), and *Pthreshold* is a constant selected by analysing the polars of the propulsive propellers.

11. Method according to any one of Claims 1 to 4 or according to Claim 9 or 10,
    **characterised in that** the direct mode is engaged when the thrust variation control order *Tcl* is obtained by using a pulse control having three states -1, 0, +1 by actuating the +1 or -1 state.

12. Method according to any one of Claims 1 to 4 or 9 to 11,
    **characterised in that** the regulated mode is engaged when *P>Pthreshold* while at the same time there is an absence of any thrust variation control order *Tcl,* by activating the 0 state of the pulse control having three states -1, 0, +1, where *P* is the current power of the propeller(s) (6) and *Pthreshold* is a constant selected by analysing the polars of the propulsive propellers (6).

13. Method according to any one of Claims 1 to 4 or 9 to 12,
    **characterised in that**, in the protected mode, it consists of using at least one loop for monitoring a limiting physical parameter, of verifying whether the limit associated with said parameter is reached or exceeded, and if so of maintaining activation of the protected mode.

14. Method according to Claim 13,
    **characterised in that** it consists of selecting, in the following order of priority 1 to 5, the limiting physical parameter for which the corresponding limit is reached or exceeded and for which the monitoring loop is activated, i.e.:

    1) the speed of rotation Ω of the propeller(s) (6),
    2) the available engine power for the propeller(s) (6), *Pmd*
    3) the transmission torque, *Trq,*
    4) the current dive deflection margin of the longitudinal cyclic control expressed as a percentage of the total deflection amplitude, *DDM*
    5) the indicated air speed, *IAS.*

15. Method according to Claim 13 or 14,
    **characterised in that**, in the protected mode, it consists of using at least one flight parameter relating to the available power margin Δ*P* or to the available torque margin Δ*Trq* in order to limit or decrease the control order if Δ*P*<0 or if Δ*Trq*<0, thereby determining a mean pitch setpoint β*tcl\** compatible with power being taken by the propeller(s) without exceeding the available power margin, the +1 state of the pulse control also being inhibited.

16. Method according to Claim 15,
    **characterised in that** it consists of using the limiting term is [sic]

$$\frac{\partial \beta}{\partial P} \times \Delta P \quad \text{if } \Delta P < 0 \text{ or } \frac{\partial \beta}{\partial Trq} \times \Delta Trq \quad \text{if } \Delta Trq < 0.$$

**17.** Method according to any one of Claim 13 to 16,
**characterised in that**, in the protected mode, it consists of using at least one flight parameter relating to the speed of rotation margin $\Delta\Omega$ available for the rotor of the propeller(s) (6), to the available indicated air speed margin $\Delta IAS$, or to the deviation of the current dive deflection margin of the longitudinal cyclic control expressed as a percentage of the total deflection amplitude $\Delta DDM$=DDM-10%, in order to apply a proportional-integral correction PI to said parameter, and if $\Delta Q$<-0.6 or if $\Delta IAS$<0 or if $\Delta DDM$<0, decrement the control order by the result of the proportional-integral regulation [sic] PI in order to determine a mean pitch setpoint $\beta tcl^*$ compatible with power being taken by the propeller(s) (6) without exceeding the available power margin, the +1 state of the pulse control then being inhibited.

**18.** Method according to Claim 17,
**characterised in that**:

- if the longitudinal cyclic control margin *DDM* is less than 10%, the mean pitch setpoint $\beta tcl^*$ is decremented by the value: *(DDM-10)* $\times$ PPgradddm + *PPiddm* $\times \int$(DDM-10%)dt, where *PPgradddm* and *PPiddm* are constants,

- if the air speed IAS is greater than the maximum authorised air speed VNE, the mean pitch setpoint $\beta tcl^*$ is decremented by the value:

*(IAS-VNE)* $\times$ PPgradias + *PPias* $\times \int$*(IAS-VNE)dt,* where *PPgradias* and *PPias* are constants,

- if the value of $\Omega$-$\Omega^*$ is less than -0.6 rad/s, the mean pitch setpoint $\beta tcl^*$ is decremented by the value:

*PPgrad*$\Omega$ $\times$ ($\Omega$-$\Omega^*$) + *PPi*$\Omega$ $\times \int$*(* $\Omega$-$\Omega^*$*)dt,* where *PPgrad*$\Omega$ and *PPi*$\Omega$ are constants.

**19.** Method according to any one of the preceding claims,
**characterised in that** the power consumed by the propeller(s) (6) is estimated by a specific algorithm, as a function of the pitches $\beta 1,\beta 2$ of the propellers, of the true air speed *TAS,* of the speed of rotation of the propellers $\Omega$, and of the air density $\sigma$.

**20.** Method according to any one of Claims 1 to 18,
**characterised in that** the power consumed by the propeller(s) (6) is estimated by a specific algorithm, as a function of the pitches $\beta 1,\beta 2$ of the propellers (6), of the true air speed *TAS*, of the speed of rotation setpoint of the propellers $\Omega^*$, and of the air density $\sigma$.

**21.** Method according to any one of Claims 1 to 18,
**characterised in that** the power consumed by one or more propellers (6) is measured by sensors of the torquemeter kind on the transmission of the propellers (6).

**22.** Control and regulation system for a rotorcraft having at least one main lift rotor, at least one variable-pitch propulsive propeller (6), and at least one power source for driving the main rotor(s) and the propeller(s) (6),
**characterised in that** it comprises means comprising a processor for implementing the method according to any one of Claims 1 to 21.

**23.** Control and regulation system according to Claim 22,
**characterised in that** it comprises an emergency mechanical chain for controlling the pitch of the propulsive propeller(s) (6) in the direct mode, and an electrical chain for controlling the pitch of the propulsive propeller(s) (6), said electrical chain including means for ensuring compliance with the limits.

**24.** Control and regulation system according to Claim 23,
**characterised in that** the mechanical chain comprises:

- a *Tcl* lever (60) for controlling the mean pitch $\beta tcl$,
- a rudder bar (67) for controlling the differential pitch $\beta d$,
- a rudder bar damper (68),

- a variable ratio crank (63), the variation being a function of the position of the *Tcl* lever (60) in order to reduce the authority of the rudder bar (67) as a function of the thrust,
- a combiner/coupler (66) for summing and subtracting the mean pitch β*tcl* and the differential pitch β*d,*
- and a system of links, cables, and pulleys.

25. Control and regulation system according to Claim 23 or 24,
**characterised in that** the electrical chain comprises:

- a *Tcl* beep associated with the collective pitch lever (70),
- a first series actuator (61) for controlling the mean pitch β*tcl* of the left propeller (6),
- a second series actuator (62) for controlling the mean pitch β*tcl* of the right propeller (6),
- a first trim actuator (65) for the *Tcl* lever (60),
- a second trim actuator (68) for the rudder bar (67),
- a computer (64) receiving information from the flight control system FCS and establishing control relationships for the pitch of the propellers (6),
- means for measuring the position of the pilot controls on the *Tcl* lever (60) and the rudder bar (67),
- electrical connections,
- and means for measuring the position of the series actuators (61,62).

26. Rotorcraft control program for implementing the method in accordance with any one of Claims 1 to 21,
**characterised in that** it comprises a code stored on a medium such as a memory or embodied by a signal, the code being readable and/or executable by at least one data processing unit such as a processor on board or suitable for mounting on board a rotorcraft in order to control and/or regulate the pitch setting of at least one propulsive propeller, the code including respective code segments for implementing characteristic operations or steps of the control and regulation method.

27. Aircraft of the rotorcraft kind, including a control and regulation system in accordance with any one of Claims 22 to 25.

**Patentansprüche**

1. Verfahren zur Steuerung und Regelung für ein Drehflügelflugzeug mit mindestens einem Hauptauftriebsrotor, mindestens einem Vortriebspropeller (6) mit variablem Anstellwinkel und mindestens einer Antriebsquelle zum Antreiben des Hauptrotors oder der Hauptrotoren und mindestens eines Propellers (6), wobei das Verfahren darin besteht, mindestens einen Sollwert für den mittleren Anstellwinkel β*tcl* für den Propeller (6) oder für die Propeller (6) auszuarbeiten in Abhängigkeit von einem Steuerbefehl für die Änderung des Schubs *Tcl* in Abhängigkeit von der Leistungsaufnahme des Propellers (6) oder der Propeller (6),
**dadurch gekennzeichnet, dass** das Verfahren darin besteht, verschiedene Funktionsmoden zu definieren, unter denen sich befinden:

- ein direkter Modus, in dem sich der Wert des mittleren Anstellwinkels direkt aus dem Steuerbefehl zur Veränderung des Schubes *Tcl* ergibt,
- ein erzwungener Modus im Falle des freien Rotierens des Hauptrotors oder der Hauptrotoren, in dem der mittlere Anstellwinkel automatisch auf Befehl des Piloten auf einen berechneten Wert des Anstellwinkels gezwungen wird,
- ein geregelter Modus, in dem die Leistungsaufnahme des Propellers oder der Propeller (6) in Abhängigkeit von einem Leistungssollwert, der sich aus einer Steuerung der Änderung des Schubs *Tcl* ergibt, geregelt wird,
- und ein geschützter Modus, der im Rahmen der verschiedenen anderen Betriebsmoden, außer dem erzwungenen Modus, aktiviert wird, wenn mindestens einer der verschiedenen physikalischen Grenzparameter seine entsprechende Grenze erreicht oder überschritten hat, und in dem automatisch der Sollwert des Anstellwinkels β*tcl* abgesenkt wird.

2. Verfahren nach Anspruch 1,
**dadurch gekennzeichnet, dass** es darin besteht, den geschützten Modus zu aktiveren, wenn mindestens eine der folgenden Bedingungen bezüglich der begrenzenden physikalischen Parameter *IAS, DDM, Ω, PPlmax, Ptot* erfüllt ist:

- *IAS ≥ VNE,*

- DDM≤10%,
- (Ω - Ω*) < -0,6 rad/s,
- PPlmax > (Trqmax_aut x Ω),
- Ptot > Pmd,

wobei *Trqmax_aut* das maximal zulässige Drehmoment des Getriebestrangs ist, *PPlmax* der Maximalwert der aktuellen Leistungen der Propeller (6) rechts und links ist, *Ptot* die Gesamtleistungsaufnahme durch die Vortriebspropeller ist, *Pmd* die maximal verfügbare Leistung am Motor für den Vortriebspropeller oder die Vortriebspropeller ist, *IAS* die angezeigte Luftgeschwindigkeit ist, *VNE* die maximal zulässige Luftgeschwindigkeit ist, Ω die Drehgeschwindigkeit der Vortriebspropeller beschreibt, Ω* der Sollwert der Drehgeschwindigkeiten der Propeller ist und *DDM* das aktuelle Maß des Ruderausschlags ist, welches dem zyklischen Längssteuersignal zu entnehmen ist, ausgedrückt in % der Gesamtruderausschlagsamplitude.

**3.** Verfahren nach Anspruch 1 oder 2,
**dadurch gekennzeichnet, dass** der erzwungene Modus auf einen prioritären Befehl des Piloten hin eingesetzt wird.

**4.** Verfahren nach einem der Ansprüche 1 bis 3,
**dadurch gekennzeichnet, dass** im erzwungenen Modus der Wert des mittleren Anstellwinkels β*tcl* durch folgende Formel beschrieben wird:

$$\beta tcl = \beta_0 + Arctg\left(\frac{TAS}{0,75\Omega R}\right) + I(Tcl)^{-5,+5}$$

wobei $\beta_0$ eine Konstante ist, *R* der Rotorradius der Propeller ist, Ω die Rotationsgeschwindigkeit der Propeller beschreibt, *TAS* die Fluggeschwindigkeit des Luftfahrzeugs ist und $I(Tcl)^{-5,+5}$ das Integral der Funktion *Beep(Tcl)* beschreibt, welches die Werte 1, 0 oder-1 einnimmt, begrenzt auf-5° und auf+5°, und welches dem Piloten die Möglichkeit anzeigt, den mittleren Anstellwinkel zu verändern, indem der Befehl zur Änderung des Schubs *Tcl* ausgelöst wird mit einem Wert des Anstellwinkels zwischen +5° und -5°.

**5.** Verfahren nach einem der Ansprüche 1 oder 4,
**dadurch gekennzeichnet, dass** der direkte Modus automatisch eingesetzt wird, wenn der mittlere Anstellwinkel des Propellers oder der Propeller kleiner als ein erster Wert β*tcl 1* ist oder wenn die durch den Propeller oder durch die Propeller erfolgte Leistungsaufnahme *P* kleiner als ein zweiter Wert *Pthr1* ist.

**6.** Verfahren nach einem der Ansprüche 1 bis 5,
**dadurch gekennzeichnet, dass** der geregelte Modus automatisch eingesetzt wird, wenn einerseits der mittlere Anstellwinkel größer als ein dritter konstanter Wert β*tcl 2* ist, und andererseits, wenn die Leistungsaufnahme *P* des Propellers oder der Propeller größer ist als ein vierter konstanter Wert *Pthr2.*

**7.** Verfahren nach einem der Ansprüche 1 bis 6,
**dadurch gekennzeichnet, dass** es im Rahmen des geschützten Modus darin besteht, eine Begrenzungs-Regelungsfunktion des Leistungssollwerts P' sowie eine proportionale integrale Korrektur *PI* an *(P*-P)* oder *(P*$_{ed}$ -P)* verwendet, um den Sollwert des Anstellwinkels β*tcl** in dem geregelten Modus gemäß einem vorbestimmten Algorithmus zu bestimmen, wobei *P* die Leistungsaufnahme des Propellers oder der Propeller (6) ist und *P*$_{ed}$* derselbe abgesenkte oder verminderte Sollwert ist.

**8.** Verfahren nach Anspruch 7,
**dadurch gekennzeichnet, dass** der Algorithmus darin besteht:

- wenn die Leistungsanforderung des Propellers oder der Propeller (6) größer als der $\frac{\Omega}{\Omega^*} x Pmd$ ist, der Leistungssollwert *P** auf diesen Wert begrenzt wird, wobei *Pmd* die maximal verfügbare Leistung auf der Höhe des Motors für einen oder mehrere Propeller (6) ist, Ω und Ω* die Drehgeschwindigkeit des Propellers oder der Propeller (6) bzw. der entsprechende Sollwert ist,
- wenn der aktuelle Wert des Ruderausschlags, der dem zyklischen longitudinalen Steuersignal zu entnehmen ist, ausgedrückt in % der maximalen Amplitude *DDM* des Ruderausschlags, kleiner als 10 % ist, wobei der Leistungssollwert *P** abgesenkt wird um den Wert: *(DDM-10)*$\times$ *PPgradddm + PPiddm*

$\times \int (DDM$ -10%$)dt$ , wobei *PPgradddm* und *PPiddm* Konstanten sind,

- wenn die Luftgeschwindigkeit *IAS* größer ist als die maximale Luftgeschwindigkeit *VNE,* wird der Leistungssollwert *P\** um den Wert *(IAS-VNE)$\times$ PPgradias + PPiias $\times \int$(IAS VNE)dt* abgesenkt, wobei *PPgradias* und *PPiias* Konstanten sind,

- wenn der Maximalwert der aktuellen Leistungen der rechten und linken Propeller (6) *PPlmax* größer ist als der Wert *(Trqmax_aut x $\Omega$),* der Sollwert der Leistung *P\** abgesenkt wird um den Wert: *PPlmax-(Trqmax_aut x $\Omega$),* wobei *Trqmax_aut* eine Konstante ist,

- wenn der Wert von $\Omega$ - $\Omega^*$ kleiner als -0,6 rad/s ist, der Leistungssollwert *P\** abgesenkt wird um den Wert:

$$PPgrad\Omega \; x \; (\Omega - \Omega^*) + PPi\Omega \times \int (\Omega - \Omega^*)dt,$$ wobei *PPgrad$\Omega$* und *PPi$\Omega$* Konstanten sind.

9. Verfahren nach einem der Ansprüche 1 bis 4,
   **dadurch gekennzeichnet, dass** es darin besteht, einen Modus mit konstantem Anstellwinkel zu definieren, in dem der mittlere Anstellwinkel des Antriebspropellers oder der Antriebspropeller (6) konstant ist.

10. Verfahren nach Anspruch 9,
    **dadurch gekennzeichnet, dass** der Modus mit konstantem Anstellwinkel eingesetzt wird, wenn die Relation $P \leq P_{Grenzwert}$ erfüllt ist, und gleichzeitig der Zustand 0 der Zustände -1, 0, +1 der Impulssteuerung zur Änderung des Schubs *Tcl* aktiviert ist, wobei P die aktuelle Leistung des Propellers (6) oder der Propeller (6) ist, und $P_{Grenzwert}$ eine Konstante ist, die gewählt wird mit Hilfe einer Analyse der abwickelbaren Helikoiden der Vortriebspropeller.

11. Verfahren nach einem der Ansprüche 1 bis 4 oder nach Anspruch 9 oder 10,
    **dadurch gekennzeichnet, dass** der direkte Modus ausgeführt wird, wenn der Steuerbefehl zur Änderung des Schubs *Tcl* erhalten wird durch die Verwendung einer Impulssteuerung mit drei Zuständen, -1, 0, +1, wobei die Zustände +1 oder -1 betätigt werden.

12. Verfahren nach einem der Ansprüche 1 bis 4 oder 9 bis 11, **dadurch gekennzeichnet, dass** der geregelte Modus ausgeführt wird, wenn die Beziehung $P > P_{Grenzwert}$ erfüllt ist, gleichzeitig mit der Abwesenheit des Steuerbefehls zur Veränderung des Schubs *Tcl*, wenn der Zustand 0 der Impulssteuerung mit drei Zuständen, -1, 0, +1 aktiviert wird, wobei P die aktuelle Leistung des Propellers (6) oder der Propeller (6) ist, und $P_{Grenzwert}$ eine Konstante ist, die gewählt wird mit Hilfe einer Analyse der abwickelbaren Helikoiden der Vortriebspropeller (6).

13. Verfahren nach einem der Ansprüche 1 bis 4 oder 9 bis 12,
    **dadurch gekennzeichnet, dass** es darin besteht, im Rahmen des geschützten Modus mindestens eine Überwachungsschleife eines physikalischen begrenzenden Parameters zu verwenden, zu überprüfen, ob der Grenzwert, der sich auf den Parameter bezieht, erreicht oder überschritten ist, und, bejahendenfalls, Aufrechterhalten der Aktivierung des geschützten Modus.

14. Verfahren nach Anspruch 13,
    **dadurch gekennzeichnet, dass** es darin besteht, den physikalischen begrenzenden Parameter, dessen entsprechender Grenzwert erreicht oder überschritten ist und für den die Überwachungsschleife aktiviert ist, in der Reihenfolge der folgenden Prioritäten 1 bis 5 auszuwählen:

    1) die Drehgeschwindigkeit $\Omega$ des Propellers oder der Propeller (6),
    2) die für den Propeller oder die Propeller (6) verfügbare Antriebsleistung *Pmd,*
    3) das Übertragungsdrehmoment *Trq,*
    4) der aktuelle Ruderausschlag, der dem longitudinalen zyklischen Steuerbefehl zu entnehmen ist, ausgedrückt in % der Maximalamplitude des Ruderausschlags *DDM,*
    5) die angegebene Luftgeschwindigkeit *IAS.*

15. Verfahren nach Anspruch 13 oder 14,
    **dadurch gekennzeichnet, dass** es darin besteht, in dem geschützten Modus mindestens einen Flugparameter zu verwenden, der sich auf den Grad der verfügbaren Leistung $\Delta P$ oder auf den Grad des verfügbaren Drehmoments $\Delta Trq$ bezieht, um den Steuerbefehl zu kappen oder zu reduzieren, wenn $\Delta P < 0$ oder wenn $\Delta Trq < 0$ ist, und somit einen Sollwert für den mittleren Anstellwinkel $\beta tcl^*$ zu bestimmen, der mit einer Leistungsentnahme des Propellers oder der Propeller kompatibel ist, die nicht den Grad der verfügbaren Leistung überschreitet, wobei der Zustand +1 der Impulssteuerung nicht einstellbar ist.

**16.** Verfahren nach Anspruch 15,
**dadurch gekennzeichnet, dass** es darin besteht, einen Kappungsausdruck zu verwenden, der bestimmt ist durch

$$\frac{\partial \beta}{\partial P} x \, \Delta P \text{, wenn } \Delta P < 0 \text{ oder } \frac{\partial \beta}{\partial Trq} x \, \Delta Trq \text{, wenn } \Delta Trq < 0.$$

**17.** Verfahren nach einem der Ansprüche 13 bis 16,
**dadurch gekennzeichnet, dass** es darin besteht, in dem geschützten Modus mindestens einen Flugparameter zu verwenden, der sich auf die verfügbare Drehgeschwindigkeitsspanne $\Delta\Omega$ für den Rotor des Propellers oder der Propeller (6) bezieht, auf die verfügbare angezeigte Luftgeschwindigkeitsspanne $\Delta IAS$ oder auf die Abweichung der aktuellen Ruderausschlagsspanne, die dem zyklischen longitudinalen Steuersignal zu entnehmen ist, welches in % der maximalen Ruderausschlagsamplitude $\Delta DDM$ =DDM-10% ausgedrückt ist, um eine proportionale integrale Korrektur PI dieses Parameters vorzunehmen, und wenn $\Delta\Omega < -0,6$ ist oder wenn $\Delta IAS < 0$ ist oder wenn $\Delta DDM < 0$ ist, den Steuerbefehl abzusenken, mit dem Ergebnis der integralen proportionalen Regelung PI, um einen Sollwert des mittleren Anstellwinkels $\beta tcl$* zu bestimmen, der mit einer Leistungsentnahme des Propellers oder der Propeller (6) kompatibel ist und nicht die Spanne der verfügbaren Leistung überschreitet, wobei der Zustand +1 der Impulssteuerung nicht einstellbar ist.

**18.** Verfahren nach Anspruch 17,
**dadurch gekennzeichnet, dass**

- wenn die Spanne der longitudinalen zyklischen Steuerung *DDM* kleiner als 10 % ist, der Sollwert des mittleren Anstellwinkels $\beta tcl$* um den Wert *(DDM-10)x PPgradddm + PPiddm* $\times\int$*(DDM -10%)dt* abgesenkt wird, wobei *PPgradddm* und *PPiddm* Konstanten sind,
- wenn die Luftgeschwindigkeit *IAS* größer ist als die maximale zulässige Luftgeschwindigkeit *VNE*, der Sollwert des mittleren Anstellwinkels $\beta tcl$* um den Wert *(IAS-VNE)x PPgradias + PPiias* x$\int$*(IAS - -VNE)dt* abgesenkt wird, wobei *PPgradias* und *PPiias* Konstanten sind,
- wenn der Wert von $\Omega - \Omega$* kleiner als -0,6 rad/s ist, der Sollwert des mittleren Anstellwinkels $\beta tcl$* um den Wert *PPgrad$\Omega$ x ($\Omega - \Omega$*) + PPi$\Omega$ x $\int$($\Omega-\Omega$*)dt* abgesenkt wird, wobei *PPgrad$\Omega$* und *PPi$\Omega$* Konstanten sind.

**19.** Verfahren nach einem der vorstehenden Ansprüche,
**dadurch gekennzeichnet, dass** die Leistungsaufnahme durch den Propeller oder durch die Propeller (6) abgeschätzt wird durch einen spezifischen Algorithmus in Abhängigkeit von den Anstellwinkeln $\beta 1$, $\beta 2$ der Propeller, der tatsächlichen Luftgeschwindigkeit *TAS,* der Drehgeschwindigkeit $\Omega$ der Propeller, und der Luftdichte $\sigma$.

**20.** Verfahren nach einem der Ansprüche 1 bis 18,
**dadurch gekennzeichnet, dass** die Leistungsaufnahme durch den Propeller oder durch die Propeller (6) abgeschätzt wird durch einen spezifischen Algorithmus in Abhängigkeit von den Anstellwinkeln $\beta 1$, $\beta 2$ der Propeller, der tatsächlichen Luftgeschwindigkeit *TAS,* des Sollwertes der Drehgeschwindigkeit $\Omega$* der Propeller, und der Luftdichte $\sigma$.

**21.** Verfahren nach einem der Ansprüche 1 bis 18,
**dadurch gekennzeichnet, dass** die Leistungsaufnahme durch einen oder mehrere Propeller (6) mit Detektoren vom Typ Drehmomentmesser am Getriebe der Propeller (6) gemessen wird.

**22.** System zur Steuerung und Regelung für ein Drehflügelflugzeug mit mindestens einem Hauptauftriebsrotor, mindestens einem Vortriebspropeller (6) mit variablem Anstellwinkel und mindestens einer Antriebsquelle, um den Hauptrotor oder die Hauptrotoren und den Propeller oder die Propeller (6) anzutreiben,
**dadurch gekennzeichnet, dass** es Mittel aufweist, die einen Rechner enthalten zur Durchführung des Verfahrens nach einem der Ansprüche 1 bis 21.

**23.** System zum Steuern und Regeln nach Anspruch 22,
**dadurch gekennzeichnet, dass** es eine mechanische Noteinrichtung aufweist zur Steuerung des Anstellwinkels des Antriebspropellers oder der Antriebspropeller (6) im direkten Modus, sowie eine elektrische Einrichtung zur Steuerung des Anstellwinkels des Antriebspropellers oder der Antriebspropeller (6), wobei die elektrische Einrichtung Mittel zur Sicherstellung der Einhaltung der Begrenzungen aufweist.

**24.** System zum Steuern und Regeln nach Anspruch 23,
**dadurch gekennzeichnet, dass** die mechanische Einrichtung aufweist:

- einen Steuerknüppel *Tcl* (60) zum Steuern des mittleren Anstellwinkels $\beta tcl$,
- ein Steuerpedal (67) zum Steuern der Anstellwinkeldifferenz $\beta d$,
- einen Dämpfer (68) des Steuerpedals,
- einen Steuerhebel (63) mit variabler Übersetzung, wobei die Variation abhängt von der Stellung des Steuerknüppels *Tcl* (60), um den Einfluss des Steuerpedals (67) in Abhängigkeit von dem Schub zu vermindern,
- ein Kombinations-/Kopplungselement (66) zum Addieren und Subtrahieren des mittleren Anstellwinkels $\beta tcl$ und der Anstellwinkeldifferenz $\beta d$,
- und ein System mit Steuerstangen, Seilen und Laufrollen.

**25.** System zum Steuern und Regeln nach Anspruch 23 oder 24,
**dadurch gekennzeichnet, dass** die elektrische Einrichtung aufweist:

- einen akustischen Signalgeber *Tcl* (70), der mit dem Steuerknüppel für den Anstellwinkel verbunden ist,
- eine erste Reihenspindel (61) zum Steuern des mittleren Anstellwinkels $\beta tcl$ des linken Propellers (6),
- eine zweite Reihenspindel (62) zum Steuern des mittleren Anstellwinkels $\beta tcl$ des rechten Propellers (6),
- eine erste Trimmspindel (65) des Steuerknüppels *Tcl* (60),
- eine zweite Trimmspindel (68) des Steuerpedals (67),
- einen Rechner (64), der Informationen des Flugsteuersystems FCS empfängt und Steuergesetzmäßigkeiten für den Anstellwinkel der Propeller (6) erstellt,
- Mittel zum Messen der Lagen der Steuerbefehle des Piloten in Abhängigkeit von der Steuerknüppel(60)-Stellung und der Steuerpedale(67)-Stellung,
- elektrische Verbindungen und
- Mittel zum Messen der Stellungen der Reihenspindeln (61, 62).

**26.** Programm zum Steuern eines Drehflügelflugzeugs zur Durchführung des Verfahrens nach einem der Ansprüche 1 bis 21,
**dadurch gekennzeichnet, dass** das Programm einen auf einem Träger, wie einem Speicher, fixierten oder durch ein Signal materialisierten Code aufweist, der durch mindestens eine Datenverarbeitungseinheit auslesbar und/ oder durchführbar ist, wie beispielsweise einem Bordrechner oder einem in das Drehflügelflugzeug einbaubaren Rechner zum Steuern und/oder Regeln der Anstellwinkeleinstellung mindestens eines Vortriebspropellers, wobei der Code Codesegmente aufweist zur jeweiligen Durchführung charakteristischer Schritte oder Etappen des Verfahrens zum Steuern und Regeln.

**27.** Luftfahrzeug vom Typ Drehflügelflugzeug mit einem System zum Steuern und Regeln nach einem der Ansprüche 22 bis 25.

Fig.1

Fig.2

EP 2 258 616 B1

Fig.3

Fig.4

Fig.5

Fig.6

EP 2 258 616 B1

Fig.7

Fig.8

Fig.9

Fig.10

Fig.11

EP 2 258 616 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4488851 A
- US 4514142 A

- FR 2916421